# EUROPÄISCHE PATENTSCHRIFT

(11) **EP 2 540 538 B1**
(45) Veröffentlichungstag und Bekanntmachung des Hinweises auf die Patenterteilung: **17.09.2014**
(21) Anmeldenummer: 12174447.8
(22) Anmeldetag: 29.06.2012
(51) Int. Cl.: B60G 17/052

(54) **Luftfederungsanlage**
Pneumatic spring assembly
Installation de ressort pneumatique

(30) Priorität: 01.07.2011 DE 102011051504
(43) Veröffentlichungstag der Anmeldung: 02.01.2013
(73) Patentinhaber: Haldex Brake Products GmbH, 69123 Heidelberg (DE)
(72) Erfinder: Sulzyc, Georg, 68305 Mannhelm (DE); Becke, Stefan, 68804 Altlussheim (DE); Nöcker, Joachim, 69412 Eberbach (DE); Tschöke, Tobias, 69121 Heidelberg (DE)
(74) Vertreter: REHBERG HÜPPE + PARTNER

(56) Entgegenhaltungen:
- EP-A2- 2 208 624
- EP-B1- 2 070 741
- DE-B3-102005 019 479
- DE-C1- 3 915 826

## Beschreibung

### TECHNISCHES GEBIET DER ERFINDUNG

Die Erfindung betrifft eine Luftfederungsanlage eines Nutzfahrzeugs, insbesondere eines Anhängers, bei welcher einerseits, insbesondere für einen Fahrbetrieb, eine automatisierte Niveauregelung erfolgt und andererseits ein willkürliches manuelles Heben und Senken durch den Fahrer veranlasst werden kann.

### STAND DER TECHNIK

EP 0 520 148 B1 offenbart eine Luftfederungsanlage, in welcher eine als Vorratsbehälter ausgebildete Druckluftquelle über eine Niveauregelventileinheit und eine Hebe-Senk-Ventileinheit pneumatisch mit Luftfederbälgen verbunden ist. Die Niveauregelventileinheit wird automatisch durch mechanische Betätigung entsprechend einer Veränderung des Niveaus, also des Abstandes eines Fahrzeugaufbaus mit einem Fahrzeugrad oder einer Fahrzeugachse, in eine Belüftungsstellung, eine Sperrstellung oder eine Entlüftungsstellung gesteuert. Die Niveauregelventileinheit wird eingesetzt, um während des Fahrbetriebs eine Soll-Niveauhöhe vorzugeben und zu halten, was insbesondere unabhängig von einer Beladung, Längs- und Querbeschleunigungen beispielsweise bei Kurvenfahrt und Oszillationen, Unebenheiten und Neigungen der Fahrbahn erfolgen soll. Über die Hebe-Senk-Ventileinheit kann der Fahrer für ruhendes Fahrzeug willkürlich das Niveau verändern, also den Fahrzeugaufbau heben oder senken, was beispielsweise zur Anpassung an eine Rampe für Be- und Entladevorgänge erfolgen kann. Hierzu besitzt die Hebe-Senk-Ventileinheit einen Wählhebel, welcher mit einer Schaltwelle um eine Rotationsachse verschwenkt werden kann zwischen Schwenkstellungen Heben, Senken und Stopp. Die Schaltwelle trägt Nocken, über welche abhängig vom Rotationswinkel der Schaltwelle und des Wählhebels Stößel betätigt werden können, die wiederum Ein- und Auslassventile betätigen. In der Stellung Heben wird ein Einlassventil geöffnet, welches einen Anschluss der Hebe-Senk-Ventileinheit, der unter Umgehung der Niveauregelventileinheit mit der Druckluftquelle verbunden ist, mit einem Ausgang zu den Luftfederbälgen verbindet. Hingegen wird in der Stellung Senken ein Auslassventil geöffnet, welches den zu den Luftfederbälgen führenden Ausgang entlüftet. In der zwischen den Stellungen Heben und Senken angeordneten Stellung Stopp sind die zuvor genannten Einlass- und Auslassventile geschlossen, sodass der Druck in den Luftfederbälgen konstant gehalten wird. In der Hebe-Senk-Ventileinheit ist eine sogenannte Totmann-Feder eingesetzt werden, welche als Torsionsfeder ausgebildet ist. Die Totmann-Feder führt den Wählhebel mit Schaltwelle von einer manuell herbeigeführten Stellung Heben oder Senken zurück in die Stellung Stopp, wenn der Fahrer keine Kräfte mehr auf den Wählhebel aufbringt. Die Hebe-Senk-Ventileinheit besitzt darüber hinaus einen pneumatischen Steueranschluss, welcher in einen Druckraum mündet. Der Druckraum ist von einem Steuerkolben begrenzt, der durch eine Stirnseite der Schaltwelle gebildet ist. Durch Vorgabe eines pneumatischen Steuerdrucks in dem Druckraum kann eine Axialverschiebung der Schaltwelle mit Wählhebel herbeigeführt werden, welche zur Folge hat, dass bei geschlossenem Einlassventil und geschlossenem Auslassventil ein Verbindungsventil geöffnet wird. Für geöffnetes Verbindungsventil ist die Niveauregelventileinheit über die Hebe-Senk-Ventileinheit mit den Luftfederbälgen verbunden, sodass automatisch über die Niveauregelventileinheit der Druck in den Luftfederbälgen und damit letztendlich das Niveau geregelt werden kann. Die durch pneumatische Druckbeaufschlagung des Druckraums herbeigeführte Stellung entspricht einer Stellung Fahrt, welche über eine Steuereinheit mit entsprechender Ansteuerung eines Magnetventils und derart ausgesteuerten Steuerdruck automatisiert eingenommen wird, wenn sich das Fahrzeug in Bewegung setzt und beispielsweise eine Grenzgeschwindigkeit überschritten wird.

Gemäß EP 1 382 469 A2 sind zwischen eine Druckluftquelle und Luftfederbälge ein 2/2-Wegeventil in Ausbildung als Sperrventil sowie ein 3/2-Wegeventil in Ausbildung als Be- und Entlüftungsventil zwischengeschaltet. Hierbei können die beiden genannten Ventile sowohl über zugeordnete Elektromagnete elektrisch für eine elektrische Niveauregelung betätigt werden als auch manuell betätigt werden über jeweils einen den Ventilen zugeordneten Stößel, um manuell ein Heben oder Senken zu verursachen.

DE 199 44 873 C1 offenbart eine Luftfederungsanlage, bei welcher in parallelen Leitungszweigen in einem ersten Leitungszweig eine mechanisch angesteuerte Niveauregelventileinheit angeordnet ist und in einem zweiten Leitungszweig eine rein elektrisch angesteuerte Niveauregelventileinheit angeordnet ist. Die mechanische Niveauregelventileinheit in dem ersten Leitungszweig besitzt einen Niveausensor, dessen Ausgangssignal einer Steuereinheit zugeführt wird, welche, auch auf Grundlage dieses Niveausignals, die rein elektrisch angesteuerte Niveauregeventileinheit in dem anderen Leitungszweig ansteuert. Die Steuereinheit steuert auch ein in dem ersten Leitungszweig angeordnetes Sperrventil an, über welches dieser erste Leitungszweig absperrbar ist, wenn die rein elektronische Niveauregelung in den zweiten Leitungszweig erfolgt. In einer weiteren Ausführungsform dieser Druckschrift ist eine Druckluftquelle über ein mechanisches Niveauregelventil, eine Hebe-Senk-Ventileinheit, ein Wechselventil und eine rein elektrisch angesteuerte Niveauregelventileinheit mit Luftfederbälgen verbunden. Hier kann der Fahrer manuell Einfluss auf das Niveau der Luftfederungsanlage sowohl über die Hebe-Senk-Ventileinheit als auch über einen elektrischen Wahlschalter nehmen, über welchen ebenfalls ein manuell verursachtes Heben und Senken bei ordnungsgemäßer Spannungsversorgung über die rein elektronische Niveauregelventileinheit veranlasst werden kann.

DE 199 16 040 B4 offenbart eine Luftfederungsanlage, bei welcher zwischen die Druckluftquelle und die hier zweikreisigen Luftfederbälge lediglich eine Niveauregelventileinheit zwischengeschaltet ist. Die Ventile der Niveauregelventileinheit sind hierbei einerseits unmittelbar elektrisch über elektrische Steueranschlüsse der Ventile ansteuerbar. Andererseits kann die Ansteuerung der Niveauregelventileinheit pneumatisch über manuell betätigte Schaltventile erfolgen, die pneumatische Steuerdrücke erzeugen, welche pneumatischen Steueranschlüssen der Ventile der Niveauregelventileinheit zugeführt werden.

EP 1 687 159 B1 offenbart die parallele Anordnung eines ausschließlich elektrisch betätigten Leitungszweig mit Niveauregelventilen, nämlich einem 3/2-Magnetventil sowie einem Magnetventil, sowie eines Leitungszweigs mit zwei manuell betätigbaren Ventilen, nämlich einem 3/2-Wegeventil sowie einem Sperrventil.

EP 2 070 741 B1 offenbart eine Hebe-Senk-Ventileinheit, die neben der manuellen Betätigung auch elektropneumatisch gesteuert von einer Durchlassstellung in eine Sperrstellung überführbar ist. Während für bewegtes Fahrzeug und Hebe-Senk-Ventileinheit in der Durchlassstellung die Niveauregelung aktiviert ist und somit ein Anheben, Konstanthalten und Absenken des Niveaus je nach Überführung des Niveauregelventils in eine Belüftungsstellung, Sperrstellung und Entlüftungsstellung möglich ist, wird durch automatisierte Umschaltung der Hebe-Senk-Ventileinheit in die Sperrstellung die automatische Niveauregelung deaktiviert. Diese Deaktivierung der Niveauregelung wird gezielt entsprechend einer Beschleunigung des Anhängers eingesetzt. Beispielsweise kann die Niveauregelung aktiviert werden, wenn es zu einem Nicken des Fahrzeugs bei einem Bremsvorgang oder zu Einfederungen infolge einer Querbeschleunigung bei einer Kurvenfahrt kommt. Würde keine Deaktivierung der Niveauregelung erfolgen, würden durch die jeweilige Beschleunigung verursachte Ein- und Ausfedervorgänge der Luftfederbälge zu unnötigen Niveauregelaktionen mit einem erhöhten Druckluftverbrauch führen.

### AUFGABE DER ERFINDUNG

Der vorliegenden Erfindung liegt die Aufgabe zugrunde, eine Luftfederungsanlage mit modifiziertem Aufbau vorzuschlagen, welche sowohl eine elektrische Niveauregelung als auch eine manuelle Veränderung der Niveauhöhe ermöglicht.

### LÖSUNG

Die Aufgabe der Erfindung wird erfindungsgemäß mit den Merkmalen des unabhängigen Patentanspruchs 1 gelöst. Weitere Ausgestaltungen der Erfindung ergeben sich entsprechend den abhängigen Patentansprüchen 2 bis 11.

### BESCHREIBUNG DER ERFINDUNG

Erfindungsgemäß findet eine Luftfederungsanlage Einsatz, bei der eine Niveauregelventileinheit und eine Hebe-Senk-Ventileinheit in pneumatischer Reihenschaltung zwischen eine Druckluftquelle und Luftfederbälge zwischengeschaltet sind. Diese Reihenschaltung hat zur Folge, dass eine Beeinflussung der Druckluftverhältnisse in den Luftfederbälgen sowohl durch die Niveauregelventileinheit als auch durch die Hebe-Senk-Ventileinheit möglich ist.

Bei der erfindungsgemäß eingesetzten Niveauregelventileinheit handelt es sich um eine derartige Einheit, die ausschließlich über elektrische Steuersignale, also insbesondere nicht mechanisch über eine mechanische Ankopplung an eine Achse oder ein Rad oder manuell, betätigbar ist. Hierbei kann die elektrische Betätigung in einer unmittelbaren Ansteuerung bestehen, sodass entsprechend eines elektrischen Steuersignals beispielsweise ein Elektromagnet bestromt wird, welcher dann unmittelbar eine Veränderung einer Ventilstellung herbeiführt. Ebenfalls möglich ist, dass es sich bei der elektrischen Betätigung um die elektrische Steuerung eines Vorsteuerdrucks handelt, der je nach Bestromung eines Magnetventils freigegeben oder abgesperrt wird. Die eigentliche Umschaltung des zugeordneten Ventils erfolgt in diesem Fall dann durch den Vorsteuerdruck. Die erfindungsgemäße Niveauregelventileinheit besitzt mindestens ein Ventil mit einer Belüftungsstellung zur Vergrößerung des Fahrzeugniveaus und/oder einer Entlüftungsstellung zur Verringerung des Fahrzeugniveaus.

Hingegen ist die erfindungsgemäß eingesetzte Hebe-Senk-Ventileinheit (auch, neben möglichen zusätzlichen anderweitigen Ansteuerungsmöglichkeiten) manuell betätigbar, sodass der Fahrer über die manuelle Betätigung die Druckluftverhältnisse beeinflussen kann. Hierbei kann eine beliebige, an sich aus dem Stand der Technik bekannte Hebe-Senk-Ventileinheit Einsatz finden, wobei eine beliebige Betätigungs-Kinematik Einsatz finden kann, insbesondere mittels einer Verschwenkung eines Bedienelements, einer translatorischen Verschiebung eines Bedienelements oder auch mit einer Betätigung mehrerer Betätigungselemente oder mit Kopplung mehrerer Betätigungselemente durch ein gemeinsames Bedienelement. Ebenfalls möglich ist, dass die "manuelle Betätigung" unter Zwischenschaltung elektrischer Stellmittel erfolgt, indem beispielsweise der Fahrer einen elektrischen Schalter betätigt, wobei diese Betätigung dann die aktuatorische Verstellung der Hebe-Senk-Ventileinheit zur Folge hat. Neben den genannten Betätigungsmöglichkeiten sind selbstverständlich beliebige andere manuelle Betätigungen möglich. Darüber hinaus kann zusätzlich neben der manuellen Betätigung auch eine elektrische Betätigung möglich sein (wie im Folgenden noch näher beschrieben wird).

Für die aus dem Stand der Technik bekannten Ausführungsformen der Hebe-Senk-Ventileinheit ist durchaus eine automatische Umschaltung der Hebe-Senk-Ventileinheit über eine Steuereinheit bekannt. Allerdings erfolgt gemäß dem Stand der Technik diese automatisierte Umschaltung lediglich für die Gewährleistung einer sogenannten Reset-to-Ride-Funktion, für welche die Hebe-Senk-Ventileinheit für das automatisierte Erkennen der Aufnahme eines Fahrbetriebs umgeschaltet wird in eine Stellung Fahrt, in der dann die Niveauregelung ermöglicht werden soll. Dies bedeutet, dass gemäß dem Stand der Technik nach manueller Betätigung der Hebe-Senk-Ventileinheit bei ruhendem Fahrzeug mit Aufnahme des Fahrbetriebs genau einmal eine Umschaltung der Hebe-Senk-Ventileinheit in die Stellung Fahrt erfolgt - ist diese Reset-to-Ride-Funktion ausgeführt, verbleibt die Hebe-Senk-Ventileinheit in der eingenommenen Stellung. Somit erfolgt für "während des Fahrbetriebs bei aktivierte Niveauregelung" bei den aus diesem Stand der Technik bekannten Ausführungsformen mit einer Reset-to-Ride-Funktion keine automatische Umschaltung der Hebe-Senk-Ventileinheit.

Erfindungsgemäß kann die Hebe-Senk-Ventileinheit, u. U. über eine etwaige derartige "Reset-to-Ride"-Funktion und die Gewährleistung der willkürlichen manuellen Betätigung zum Heben und Senken für geparktes Fahrzeug hinaus, eine weitere Funktion erfüllen: Während eines Fahrbetriebs mit aktivierter Niveauregelung wird erfindungsgemäß die Hebe-Senk-Ventileinheit über eine elektrische Steuerung zwischen einer Durchlassstellung und einer Sperrstellung hin- und hergeschaltet. Hierbei kann auch lediglich die Bewegung in eine Richtung durch die elektrische Steuerung veranlasst werden, während die Rückführung in die andere Stellung auf andere Weise, insbesondere durch mindestens ein passives Stellmittel wie eine Feder oder Totmann-Feder, erfolgen kann. Somit bindet die vorliegende Erfindung erstmalig die Ansteuerung der Hebe-Senk-Ventileinheit in die Niveauregelung ein, wodurch sich erweiterte Gestaltungsmöglichkeiten, erweiterte Regelungsmöglichkeiten und/oder eine Einsparung von Bauelementen ergeben können.

Möglich ist insbesondere, dass die erfindungsgemäße Niveauregelventileinheit selber kein Sperrventil besitzt, über welches die Luftfederbälge abgesperrt werden, um das Fahrzeugniveau konstant zu halten. Vielmehr kann in diesem Fall die Sperrfunktion von der Hebe-Senk-Ventileinheit in der Sperrstellung erfüllt werden, so dass für die Erfüllung sämtlicher Niveauregelungsfunktionen mit einem Sperren, Belüften und Entlüften sowohl die Niveauregelventileinheit (Belüften, Entlüften) als auch die Hebe-Senk-Ventileinheit (Sperrstellung, Durchlassstellung) angesteuert werden muss.

Der Erfindung liegt ebenfalls die Erkenntnis zugrunde, dass gemäß EP 2 070 741 B1 zwar ebenfalls die Hebe-Senk-Ventileinheit automatisch von einer Durchlassstellung in eine Sperrstellung umgeschaltet wird. Dies erfolgt aber nicht für "aktivierte Niveauregelung während des Fahrbetriebs" zum Konstanthalten des Niveaus in Betriebszuständen, in denen das Niveau dem Sollniveau entspricht oder nur in einem zulässigen Ausmaß hiervon abweicht. Vielmehr erfolgt die Umschaltung hier in die Sperrstellung, wenn die Niveauregelung, insbesondere bei Vorliegen einer einen Schwellwert überschreitenden Längs- oder Querbeschleunigung, deaktiviert werden soll, sodass trotz Fahrbetriebs und einer Niveauänderung in einem Ausmaß, die an sich die Anpassung des Niveaus an ein Sollniveau über die Niveauregelung zur Folge hätte, keine Veränderung des Niveaus erfolgt. Es versteht sich, dass kumulativ zu den erfindungsgemäßen Maßnahmen die in EP 2 070 741 B1 beschriebenen Maßnahmen zum Einsatz kommen können.

Für eine bevorzugte Ausgestaltung der Erfindung wird zum Heben des Niveaus während des Fahrbetriebs und aktivierter Niveauregelung die Hebe-Senk-Ventileinheit automatisiert in eine Durchlassstellung überführt, während die Niveauregelventileinheit automatisiert in eine Belüftungsstellung überführt wird. In diesen Stellungen ist die Druckluftquelle über die Niveauregelventileinheit und die Hebe-Senk-Ventileinheit pneumatisch mit den Luftfederbälgen verbunden, sodass eine Belüftung der Luftfederbälge erfolgen kann. Auch zum Senken des Niveaus während des Fahrbetriebs und aktivierter Niveauregelung wird automatisiert die Hebe-Senk-Ventileinheit in die Durchlassstellung überführt. Allerdings wird dann die Niveauregelventileinheit in die Entlüftungsstellung gebracht. In diesem Betriebszustand ist eine Entlüftung (der Hebe-Senk-Ventileinheit oder der Niveauregelventileinheit) über die Hebe-Senk-Ventileinheit mit den Luftfederbälgen verbunden, sodass die Luftfederbälge entlüftet werden können. Soll hingegen während des Fahrbetriebs und aktivierter Niveauregelung das Niveau temporär konstant gehalten werden, wird die Hebe-Senk-Ventileinheit in die Sperrstellung überführt, in der die pneumatische Verbindung zwischen den Luftfederbälgen und der Entlüftung sowie der Druckluftquelle unterbrochen ist.

Grundsätzlich möglich ist, dass die Niveauregelventileinheit zwischen der Hebe-Senk-Ventileinheit und den Luftfederbälgen angeordnet ist. In diesem Fall befindet sich vorzugsweise sowohl für ein zu senkendes Niveaus während des Fahrbetriebs als auch für ein haltendes Niveaus während des Fahrbetriebs die Hebe-Senk-Ventileinheit in einer Sperrstellung, während gleichzeitig zum Halten des Niveaus die Niveauregelventileinheit in einer Belüftungsstellung ist und die Niveauregelventileinheit in eine Entlüftungsstellung verbracht wird, wenn ein Senken des Niveaus gewünscht ist. Ist für diese Ausgestaltung hingegen ein Heben des Niveaus während des Fahrbetriebs und aktivierter Niveauregelung gewünscht, wird die Hebe-Senk-Ventileinheit in die Durchlassstellung überführt, während die Niveauregelventileinheit in die Belüftungsstellung geschaltet wird.

Vorzugsweise ist aber die Hebe-Senk-Ventileinheit zwischen der Niveauregelventileinheit und den Luftfederbälgen angeordnet, sodass über die Hebe-Senk-Ventileinheit in der Sperrstellung die Niveauregelventileinheit pneumatisch von den Luftfederbälgen abgekoppelt werden kann, während diese für die Durchlassstellung der Hebe-Senk-Ventileinheit mit den Luftfederbälgen pneumatisch gekoppelt ist. Für diese Ausgestaltung bleibt der pneumatische Zustand der Luftfederbälge konstant unabhängig von der jeweils eingenommenen Stellung der Niveauregelventileinheit, wenn sich die Hebe-Senk-Ventileinheit in ihrer Sperrstellung befindet.

Im Rahmen der Erfindung kann eine Steuerung der beteiligten pneumatischen Bauelemente durch eine einzige Steuereinheit oder auch durch mehrere "verteilte" Steuereinheiten erfolgen, die miteinander und mit weiteren Steuereinheiten vernetzt sein können. Insbesondere möglich ist, dass eine Steuereinheit eingesetzt ist, die zusätzlich als "EBS-Steuereinheit" genutzt ist und somit multifunktional neben der Steuerung der Luftfederungsanlage auch für die Steuerung der Bremsanlage zuständig ist. In besonderer Ausgestaltung der Erfindung ist eine einzige (integrale) Steuereinheit mit einem oder mehreren vernetzten Prozessoren vorgesehen, über welche sowohl die elektrische Ansteuerung der Niveauregelventileinheit als auch die elektrische Ansteuerung der Hebe-Senk-Ventileinheit erfolgt. Die Steuereinheit überführt die Hebe-Senk-Ventileinheit von der Durchlassstellung in die Sperrstellung und/oder von der Sperrstellung in die Durchlassstellung. Durch Einsatz einer gemeinsamen Steuereinheit kann der Bauaufwand reduziert werden. Des Weiteren kann über diese gemeinsame Steuereinheit eine gute Koordinierung der Schaltzustände der Niveauregelventileinheit einerseits und der Hebe-Senk-Ventileinheit andererseits erfolgen.

Für die Erfassung des Niveaus der Luftfederungsanlage sind vielfältige, an sich aus dem Stand der Technik bekannte Möglichkeiten gegeben. Beispielsweise kann das Niveau über die Beladung des Fahrzeugs sowie einen erfassten Druck in mindestens einem Luftfederbalg und/oder in einer Zuführleitung zu demselben ermittelt werden. Ebenfalls möglich ist die zunächst mechanische Erfassung des Niveaus und Umwandlung eines mechanischen Niveausignals in ein elektrisches Signal, beispielsweise über eine Art Potentiometer. In besonderer Ausgestaltung der Erfindung wird der Steuereinheit ein Signal eines Wegsensors zur Erfassung des Niveaus zugeführt. Hierbei können beliebige an sich bekannte Wegsensoren eingesetzt werden, beispielsweise auf Grundlage eines Hall-Sensors, einer Infrarot-Abstandsmessung oder Sensoren, wie diese in WO 01/89863 A2 beschrieben sind, vgl. auch den in dieser beschrieben oder der Druckschrift entgegengehaltenen Stand der Technik.

Hierbei kann der Wegsensor separat an beliebiger Stelle in dem Fahrzeug angeordnet sein, sodass das Ausgangssignal des Sensors der Steuereinheit über eine externe Signalleitung zugeführt wird. In weiterer Ausgestaltung der Erfindung ist der Wegsensor in die Niveauregelventileinheit integriert, wodurch sich ein besonders kompakter Aufbau der Luftfederungsanlage ergibt und unter Umständen eine gemeinsame elektrische Schnittstelle zwischen Niveauregelventileinheit und Steuereinheit für die Signalübertragung von dem Sensor zu der Steuereinheit und für die Ansteuerung der Niveauregelventileinheit durch die Steuereinheit genutzt werden kann.

Für die Ausbildung der Niveauregelventileinheit zur Ermöglichung der Niveauregelung gibt es vielfältige Möglichkeiten. Beispielsweise verfügt die Niveauregelventileinheit über mindestens ein elektrisch ansteuerbares 2/2-Wegeventil oder Sperrventil, welches in seine Sperrstellung verbracht wird, wenn eine Veränderung des Druckniveaus in den Luftfederbälgen nicht erforderlich ist. Des Weiteren kann die Niveauregelventileinheit über ein elektrische ansteuerbares 3/2-Wegeventil verfügen, welches eine Belüftungsstellung sowie eine Entlüftungsstellung einnehmen kann, in denen eine Be- oder Entlüftung der Luftfederbälge erfolgen kann (u. U. aber nur für Hebe-Senk-Ventileinheit in der Belüftungsstellung). Es versteht sich, dass auch möglich ist, dass mehrere der genannten Ventile in der Niveauregelventileinheit angeordnet sein können. Beispielsweise kann ein einziges elektrisch ansteuerbares 3/2-Wegeventil vorgesehen sein, während zwei elektrisch ansteuerbare Sperrventile dem 3/2-Wegeventil nachgeordnet sein können für die pneumatische Verbindung mit unterschiedlichen Luftfederkreisen (so genannte "zweikreisige Luftfederungsanlage").

Möglich ist, dass die genannte Sperrventile und 3/2-Wegeventile direkt elektromagnetisch angesteuert sind. In besonderer Ausgestaltung der Erfindung besitzt die Niveauregelventileinheit mindestens ein elektrische ansteuerbares Ventil in Ausbildung als elektromagnetisch vorgesteuertes Vorsteuerventil. Derartige Vorsteuerventile besitzen den Vorteil, dass mit verhältnismäßig kleinem Aufbau des Elektromagneten und kleinen Steuerströmen lediglich kleine Ventilquerschnitte geschaltet werden, die dann den Vorsteuerdruck freigeben oder absperren können, mittels dessen dann größere Ventilquerschnitte geschaltet werden können.

Während grundsätzlich der Stand der Technik dem Vorurteil folgt, dass in einer Niveauregelventileinheit üblicherweise eine Kombination sowohl eines Be- und Entlüftungsventils in Ausbildung als 3/2-Wegeventil mit einem zusätzlichen 2/2-Wegeventil erfolgt, geht die Erfindung in weiterer Ausgestaltung einen anderen Weg: Hier besitzt die Niveauregelventileinheit lediglich eine Belüftungsstellung sowie eine Entlüftungsstellung, ohne dass eine zusätzliche Sperrstellung vorgesehen ist. Damit wäre über die Niveauregelventileinheit allein lediglich die Belüftung oder Entlüftung möglich, ohne dass es möglich wäre, über die Niveauregelventileinheit den pneumatischen Zustand der Luftfederbälge konstant zu halten. Erfindungsgemäß erfolgt für die Niveauregelung im Fahrbetrieb bei aktivierter Niveauregelung eine Veränderung des Niveaus dadurch, dass die Hebe-Senk-Ventileinheit in die Durchlassstellung geschaltet wird. Je nachdem, ob ein Heben oder Senken des Aufbaus gewünscht ist, wird die Niveauregelventileinheit dann elektrisch in die Belüftungsstellung oder die Entlüftungsstellung geschaltet. Ist hingegen ein Konstanthalten des Niveaus bei aktivierter Niveauregelung angezeigt, da eine Veränderung des Niveaus nicht erforderlich ist, wird die Hebe-Senk-Ventileinheit in die Sperrstellung geschaltet. Somit übernimmt das Hebe-Senk-Ventil die Funktion eines Sperrventils, welches gemäß dem Stand der Technik in die Niveauregelventileinheit integriert ist. Hierdurch kann einerseits der Bauaufwand und der Steuerungsbedarf für die Niveauregelventileinheit verringert werden, während andererseits die Hebe-Senk-Ventileinheit multifunktional genutzt wird.

Durchaus möglich ist, dass Aktuatoren, beispielsweise Vorsteuer-Magnetventile oder mindestens ein rein elektrisches Stellaggregat, vorgesehen sind, über welche die Hebe-Senk-Ventileinheit in unterschiedliche Bewegungsrichtungen umschaltbar ist. Allerdings auch möglich ist, dass mindestens ein Federelement vorgesehen ist, über welches eine Vorzugsstellung der Hebe-Senk-Ventileinheit eingenommen werden kann, wenn keine zusätzlichen Kräfte auf die Hebe-Senk-Ventileinheit, beispielsweise durch den Aktuator, aufgebracht werden. Somit kann insbesondere die Bewegung von der Durchlassstellung in die Sperrstellung durch das mindestens eine Federelement erfolgen, während die Umschaltung von der Sperrstellung in die Durchlassstellung durch den Aktuator erfolgt (oder umgekehrt). Hervorzuheben ist, dass dieses Federelement nicht nur im Rahmen der Niveauregelung zum Konstanthalten des Niveaus genutzt werden kann - vielmehr kann dieses Federelement auch multifunktional eingesetzt werden, indem dieses eine Rückführung aus einer manuell herbeigeführten Stellung Heben und/oder Senken in eine Stellung Stopp oder Fahrt bewerkstelligt, also eine Totmann-Feder bildet.

Möglich ist, dass die Hebe-Senk-Ventileinheit frei manuell bewegbar ist und die unterschiedlichen Stellungen zusätzlich durch elektrische Betätigung geeigneter Aktuatoren ansteuerbar sind. Darüber hinaus möglich ist, dass Vorzugsstellungen der Hebe-Senk-Ventileinheit über eine Rast- oder Verriegelungseinheit vorgesehen und/oder gesichert werden können. Hierbei kann eine eingenommene Raststellung durch Aufbringung hinreichender Kräfte durch die Aktuatoren verlassen oder durch die Aktuatoren und/oder den Benutzer "überdrückt" werden. In weiterer Ausgestaltung der Erfindung ist die Rast- oder Verriegelungseinheit über ein elektrisches Steuersignal aktivierbar und/oder deaktivierbar. Denkbar ist hierbei, dass grundsätzlich auch bei Einsatz einer Feder oder einer Totmann-Feder die Hebe-Senk-Ventileinheit eine Stellung wie Senken oder Heben nicht verlassen würde angesichts der Rasteinheit. Wird dann aber über das elektrische Steuersignal die Rasteinheit deaktiviert, kann die Totmann-Feder zur Wirkung kommen, sodass in diesem Fall eine Veränderung der Schaltstellung des Hebe-Senk-Ventils durch die Deaktivierung der Rasteinheit und anschließend durch die Totmann-Feder verursacht wird. Dies kann für die Reset-to-Ride-Funktion und/oder für die Überführung von der Durchlassstellung in die Sperrstellung (oder umgekehrt) für aktivierte Niveauregelung erfolgen.

Die erfindungsgemäße Luftfederungsanlage kann einkreisig ausgebildet sein. Ebenfalls denkbar ist die Ausbildung der Luftfederungsanlage in zweikreisiger Ausgestaltung, wobei dann die Niveauregelungsventileinheit die separate pneumatische Ansteuerung, nämlich Be- und Entlüftung der beiden Luftfederkreise ermöglicht und die Hebe-Senk-Ventileinheit über zwei separate Ein- und Ausgänge sowohl mit der Niveauregelventileinheit als auch mit den Luftfederbälgen der beiden Kreise kommunizieren kann.

In weiterer Ausgestaltung der Erfindung ist die Luftfederungsanlage mit einem Sensor ausgestattet, welcher eine Betriebsstellung des Betätigungsorgans der Hebe-Senk-Ventileinheit erfasst. Hierbei kann es sich beispielsweise um einen Weg- oder Winkelsensor handeln, welcher unmittelbar die Betriebsstellung des Betätigungsorgans erfasst. Möglich ist aber auch, dass der Sensor lediglich "mittelbar" die Betriebsstellung des Betätigungsorgans erfasst. Beispielsweise kann in diesem Fall der Sensor als Drucksensor oder Druckschalter ausgebildet sein, welcher einen Druck an einem Anschluss oder in einer Leitung erfasst, der von der Betriebsstellung des Betätigungsorgans abhängig ist. Das Ausgangssignal des Sensors kann dann einer Steuereinheit zugeführt werden und mittels der Steuereinheit ausgewertet werden. Um lediglich einige Beispiele zu nennen, kann die Steuereinheit anhand des Ausgangssignals des Sensors verifizieren, ob eine Soll-Betriebsstellung von dem Betätigungsorgan der Hebe-Senk-Ventileinheit eingenommen ist. Ist dieses nicht der Fall, können geeignete Maßnahmen eingeleitet werden, wie das Erzeugen einer Fehlermeldung, die dem Fahrer oder einer Bedienperson zur Kenntnis gebracht wird, das Ergreifen geeigneter Steuermaßnahmen zur Herbeiführung der gewünschten Betriebsstellung oder die Einleitung von Maßnahmen zur Gewährleistung eines Notfallbetriebs. Andererseits kann über den Sensor detektiert werden, wenn eine manuelle Betätigung der Hebe-Senk-Ventileinheit erfolgt, um dann während der manuellen Betätigung eine elektrische Niveauregelung zu deaktivieren.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.

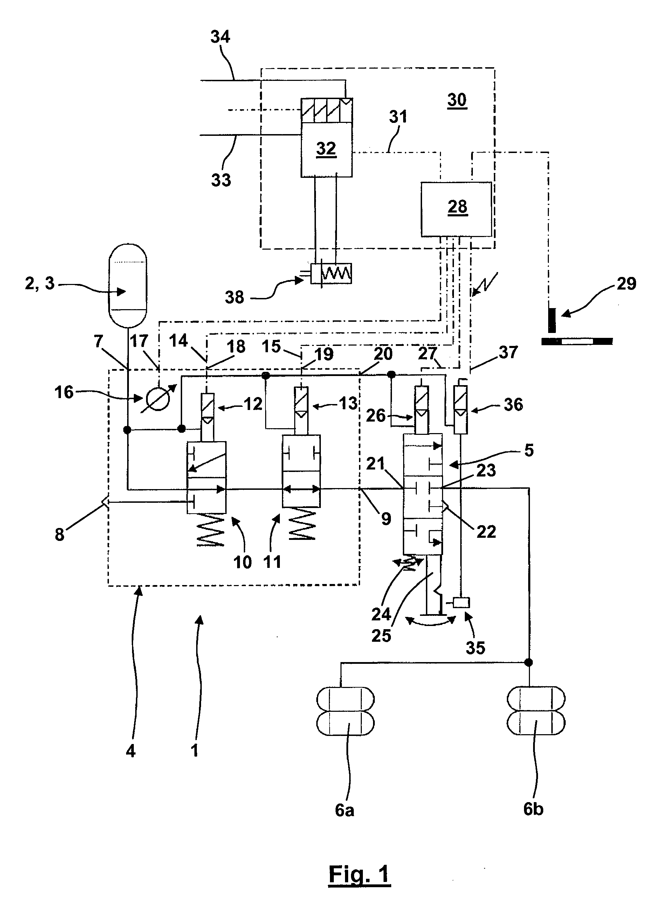

- **Fig. 1 bis Fig. 14**: zeigen unterschiedliche Ausgestaltungen erfindungsgemäßer Luftfederungsanlagen in schematischer Darstellung.

### FIGURENBESCHREIBUNG

**Fig. 1** zeigt eine Luftfederungsanlage 1, in welcher eine Druckluftquelle 2, hier ein Behälter 3, über eine Niveauregelventileinheit 4 und eine Hebe-Senk-Ventileinheit 5 in dieser Reihenfolge mit Luftfederbälgen 6a, 6b in pneumatischer Reihenschaltung verbunden ist.

Die Niveauregelventileinheit 4 besitzt einen unmittelbar mit dem Behälter 3 verbundenen Eingangsanschluss 7, eine Entlüftung 8 und einen Ausgangsanschluss 9. Zwischen Eingangsanschluss 7 und Ausgangsanschluss 9 sind in pneumatischer Reihenschaltung ein 3/2-Wegeventil 10 und ein 2/2-Wegeventil 11 in dieser Reihenfolge zwischengeschaltet. Das 2/2-Wegeventil besitzt eine Durchlassstellung, welche ohne zusätzliche Ansteuerung infolge einer Feder eingenommen wird, sowie eine Sperrstellung. Das 3/2-Wegeventil weist eine Belüftungsstellung auf, die infolge einer Feder ohne zusätzliche Beaufschlagung eingenommen wird, sowie eine Entlüftungsstellung. In der Sperrstellung des 2/2-Wegevnetils 11 ist der Ausgangsanschluss 9 der Niveauregelventileinheit 4 abgesperrt. Hingegen ist in der Durchlassstellung des 2/2-Wegeventils 11 der Ausgangsanschluss 9 mit dem 3/2-Wegeventil 10 verbunden, wobei dieses
- in der in Fig. 1 wirksamen Belüftungsstellung den Eingangsanschluss 7 und damit den Behälter 3 mit dem Ausgangsanschluss 9 verbindet und
- in der in Fig. 1 nicht wirksamen Stellung den Ausgangsanschluss 9 mit der Entlüftung 8 verbindet.

Für das dargestellte Ausführungsbeispiel sind das 3/2-Wegeventil 10 und das 2/2-Wegeventil 11 als vorgesteuerte Magnetventile ausgebildet. Die Erzeugung eines Steuerdrucks erfolgt hier über Aktuatoren 12, 13, welchen ein Versorgungsdruck von dem Eingangsanschluss 7 zugeführt wird, der von Magnetventilen entsprechend elektrischer Steuersignale 14, 15 in einen Vorsteuerdruck umgewandelt wird, mittels dessen letztendlich das 3/2-Wegeventil 10 bzw. das 2/2-Wegeventil 11 in die in Fig. 1 nicht wirksame Schaltstellung umschaltbar ist.

Durch geeignete Steuersignale 14, 15 kann die Niveauregelventileinheit 4 folgende unterschiedliche Betriebsstellungen einnehmen:
- In einer Sperrstellung der Niveauregelventileinheit 4 befindet sich das 2/2-Wegeventil 11 in seiner Sperrstellung, während das 3/2-Wegeventil 10 in seine Belüftungsstellung oder Entlüftungsstellung geschaltet sein kann. In dieser Sperrstellung der Niveauregelventileinheit 4 erhält die Niveauregelventileinheit 4 die pneumatischen Verhältnisse an dem Ausgangsanschluss 9 aufrecht.
- In einer Belüftungsstellung der Niveauregelventileinheit 4 verbindet diese den Ausgangsanschluss 9 mit dem Eingangsanschluss 7 und damit dem Behälter. Zur Gewährleistung dieser Belüftungsstellung befindet sich das 2/2-Wegeventil 11 in seiner Durchlassstellung, während sich das 3/2-Wegeventil 10 ebenfalls in seiner Durchlassstellung befindet.
- In einer Entlüftungsstellung der Niveauregelventileinheit 4 erfolgt eine Verbindung des Ausgangsanschlusses 9 mit der Entlüftung 8, wozu das 3/2-Wegeventil 10 in seine Entlüftungsstellung geschaltet wird, während das 2/2-Wegeventil in seine Durchlassstellung geschaltet wird.

Möglich ist, dass ein Sensor 16, welcher unmittelbar oder mittelbar ein Niveau der Luftfederungsanlage erfasst, in die Niveauregelventileinheit 4 integriert ist. Die Niveauregelventileinheit 4 besitzt elektrische Anschlüsse 17, 18, 19, wobei über den Anschluss 17 das Signal des Sensors 16 aus der Niveauregelventileinheit 4 herausgeführt ist, während über die Anschlüsse 18, 19 der Niveauregelventileinheit 4 die elektrischen Steuersignale 14, 15 zugeführt werden können. Für das in Fig. 1 dargestellte Ausführungsbeispiel besitzt die Niveauregelventileinheit 4 einen weiteren Ausgangsanschluss 20, welcher unmittelbar mit dem Eingangsanschluss 7 verbunden ist.

Die Hebe-Senk-Ventileinheit 5 ist für das Ausführungsbeispiels gemäß Fig. 1 als 3/3-Wegeventil ausgebildet mit einem Eingangsanschluss 21, einem Entlüftungsanschluss 22 sowie einem Ausgangsanschluss 23. Der Ausgangsanschluss 23 ist mit den Luftfederbälgen 6a, 6b pneumatisch permanent verbunden. In einer mittigen, in Fig. 1 wirksamen Schaltstellung, die die Hebe-Senk-Ventileinheit 5 infolge einer Totmann-Feder 24 einnimmt, wenn keine anderweitige Betätigung oder Rastierung erfolgt, sperrt die Hebe-Senk-Ventileinheit 5 den Eingangsanschluss 21, den Entlüftungsanschluss 22 und den Ausgangsanschluss 23 ab. Hingegen erfolgt bei Bewegung der Hebe-Senk-Ventileinheit 5 in eine untere Schaltstellung entgegen der Beaufschlagung durch die Totmann-Feder 24 über die Hebe-Senk-Ventileinheit 5 eine Verbindung des Eingangsanschlusses 21 mit dem Ausgangsanschluss 23, während der Entlüftungsanschluss 22 abgesperrt ist. In der dritten, entgegen der Totmann-Feder 24 nach oben gegenüber Fig. 1 verschobenen Schaltstellung verbindet die Hebe-Senk-Ventileinheit 5 den Ausgangsanschluss 23 mit dem Entlüftungsanschluss 22, während der Eingangsanschluss 21 abgesperrt ist.

Eine Betätigung der Hebe-Senk-Ventileinheit 5 ist sowohl manuell als auch mittels elektrischer Ansteuerung möglich:

Bei manueller Betätigung befindet sich die Hebe-Senk-Ventileinheit 5 ohne aufgebrachte Betätigungskräfte infolge der Totmann-Feder 24 in der mittigen Schaltstellung, die eine Stellung Stopp bildet, in welcher der Druckluftzustand der Luftfederbälge 6a, 6b angesichts der Absperrung des Ausgangsanschlusses 23 konstant gehalten wird. Bei Aufbringen von manuellen Betätigungskräften in die untere Schaltstellung nimmt die Hebe-Senk-Ventileinheit 5 eine Stellung Heben ein, in welcher für unbestromte Steueranschlüsse 18, 19 mit Niveauregelventileinheit 4 in der Belüftungsstellung Druckluft aus dem Behälter 3 durch die Niveauregelventileinheit 4 und die Hebe-Senk-Ventileinheit 5 den Luftfederbälgen 6a, 6b zugeführt werden kann. Wird hingegen die Hebe-Senk-Ventileinheit 5 durch manuelle Betätigung entgegen der Beaufschlagung durch die Totmann-Feder 24 in die obere Schaltstellung verbracht, welche einer Stellung Senken entspricht, erfolgt über die Hebe-Senk-Ventileinheit 5 eine Entlüftung der Luftfederbälge. Die manuelle Betätigung erfolgt über ein Betätigungsorgan 25, welches für das dargestellte Ausführungsbeispiel als Wählhebel ausgebildet ist. Der Fachmann wird erkennen, dass hier streng genommen die unterschiedlichen Schaltstellungen mit unterschiedlichen Winkelstellungen verbunden sind. Durchaus möglich ist aber auch eine anderweitige Ausbildung der Hebe-Senk-Ventileinheit 5, beispielsweise mit einer translatorischen Betätigung des Betätigungsorgans 25.

Zusätzlich zu der manuellen Betätigung der Hebe-Senk-Ventileinheit 5 kann diese auch elektropneumatisch betätigt werden. Hierzu besitzt die Hebe-Senk-Ventileinheit 5 einen Aktuator 26, welchem ein Versorgungsdruck aus dem Behälter 3, insbesondere von dem Ausgangsanschluss 20, zugeführt wird. Der Aktuator 26 besitzt ein vorsteuerndes Magnetventil, mittels dessen nach Maßgabe eines elektrischen Steuersignals 27 aus dem Versorgungsdruck ein Vorsteuerdruck erzeugt wird, mittels dessen eine Umschaltung der Hebe-Senk-Ventileinheit 5 möglich ist. Ohne Anliegen eines elektrischen Steuersignals 27 befindet sich die Hebe-Senk-Ventileinheit 5 infolge der Totmann-Feder in der in Fig. 1 wirksamen Sperrstellung, die für manuelle Betätigung der Stellung Stopp entspricht. Wird dem Aktuator 26 hingegen ein elektrisches Steuersignal 27 zugeführt, wandelt der Aktuator 26 den Versorgungsdruck um in einen Vorsteuerdruck, welcher die Hebe-Senk-Ventileinheit 5 umschaltet in die untere Schaltstellung, welche eine Durchlassstellung ist und für die manuelle Betätigung einer Stellung Heben entspricht. Somit kann ohne manuelle Betätigung, aber für die rein elektronische Ansteuerung während der aktivierten Niveauregelung die Hebe-Senk-Ventileinheit 5 lediglich zwei der drei möglichen Schaltstellungen einnehmen. Befindet sich mit anliegendem elektrischen Steuersignal 27 die Hebe-Senk-Ventileinheit 5 in der Durchlassstellung, sind die Luftfederbälge 6a, 6b über die Hebe-Senk-Ventileinheit 5 mit der Niveauregelventileinheit 4 verbunden, sodass je nach Vorgabe der elektrischen Steuersignale 14, 15 an den Anschlüssen 18, 19 eine Be- und Entlüftung der Luftfederbälge 6a, 6b erfolgen kann und damit eine Erhöhung oder Verringerung des Niveaus erfolgen kann. Wird hingegen erkannt, dass keine Veränderung des Niveaus erforderlich ist, weil das Niveau dem Sollniveau (innerhalb vorgegebener Abweichungen) entspricht, so wird das Steuersignal 27 so verändert, dass die Hebe-Senk-Ventileinheit die in Fig. 1 wirksame Sperrstellung einnimmt, wobei die Rückführung in dieser Sperrstellung vorzugsweise durch die Totmann-Feder 24 erfolgt.

Gemäß Fig. 1 verfügt die Luftfederungsanlage 1 über eine Steuereinheit 28, welcher ein Signal mindestens eines Radsensors 29 sowie ein Signal des Sensors 16 von dem Anschluss 17 zugeführt wird. Die Steuereinheit 28 erzeugt die Steuersignale 14, 15 sowie 27 zur Herbeiführung der unterschiedlichen Schaltstellungen der Niveauregelventileinheit 4 und der Hebe-Senk-Ventileinheit 5 für ein Halten des Niveaus oder Verändern des Niveaus der Luftfederbälge 6a, 6b. Während durchaus denkbar ist, dass die Steuereinheit 28 lediglich für die Ansteuerung der Luftfederungsanlage 1 zuständig ist und beispielsweise über weitere Signalleitungen oder ein CAN mit weiteren Steuereinheiten vernetzt ist, ist in Fig. 1 ein Ausführungsbeispiel dargestellt, in welchem die Steuereinheit 28 integraler Bestandteil einer elektronischen Bremssteuerung EBS 30 ist. In diesem Fall erzeugt die Steuereinheit 28 ein Steuersignal 31, welches ein Bremssteuerventil 32 steuert bzw. eine Bremsregelung durchführt. Dem Bremssteuerventil 32 wird über eine Vorratsleitung 33 Druckluft von einem Kupplungskopf "Vorrat" des Anhängers zugeführt sowie über eine Bremssteuerleitung 34 ein Steuerdruck von einem Kupplungskopf "Bremse" des Anhängers zugeführt. Das Bremssteuerventil 32 erzeugt die Steuerdrücke für einen Kombi-Federspeicherbremszylinder 38.

Optional kann die Hebe-Senk-Ventileinheit 5 mit mindestens einer Rasteinrichtung ausgestattet sein. Eine derartige Rasteinrichtung kann einerseits Einsatz finden für den Fall, dass bei manuell verursachtem Heben oder Senken der Benutzer nicht dauerhaft Kräfte auf das Betätigungsorgan 25 aufbringen soll. Für diese Ausgestaltung muss der Bediener lediglich über das Betätigungsorgan 25 die Stellung Heben oder Senken auswählen, die dann dauerhaft durch die Rast- oder Verriegelungseinrichtung 35 gesichert wird. Eine Deaktivierung der Rast- oder Verriegelungseinrichtung 35 kann bspw. durch die Steuereinheit 28 mit Erreichen einer minimalen oder maximalen Niveauhöhe und/oder mit der Aufnahme eines Fahrbetriebs erfolgen, womit dann, verursacht durch die Totmann-Feder 24, eine automatische Überführung in die Sperrstellung bzw. die Schaltstellung "Stopp" erfolgen kann. Möglich ist alternativ oder kumulativ, dass eine Verriegelung für die elektrische Herbeiführung der Durchlassstellung der Hebe-Senk-Ventileinheit 5 während des Fahrbetriebs erfolgt, sodass lediglich kurzzeitig das elektrische Steuersignal 27 erzeugt werden muss zwecks Umschaltung der Hebe-Senk-Ventileinheit 5 von der Sperrstellung in die Durchlassstellung. Die Rast- oder Verriegelungseinrichtung 35 bleibt dann so lange wirksam, bis die Steuereinheit 28 erkennt, dass eine ausreichende Niveauänderung durch geänderte elektrische Ansteuerung der Niveauregelventileinheit 4 erfolgt ist - dann kann die Rast- oder Verriegelungseinrichtung 35 deaktiviert werden mit Rückkehr der Hebe-Senk-Ventileinheit 5 in die Sperrstellung. Denkbar ist der Einsatz einer beliebigen Rast- oder Verriegelungseinrichtung 35, bei welcher ein Rast- oder Verriegelungselement auch unmittelbar elektrisch betätigt werden kann. Für das in Fig. 1 dargestellte Ausführungsbeispiel ist die Rast- oder Verriegelungseinrichtung 35 elektropneumatisch aktiviert bzw. deaktiviert, wobei ein Aktuator 36 in Ausbildung als Vorsteuer-Magnetventil Einsatz findet, dem ein elektrisches Steuersignal 37 von der Steuereinheit 28 zugeführt wird. Dem Aktuator 36 wird weiterhin ein Versorgungsdruck zugeführt, welcher für das in Fig. 1 dargestellte Ausführungsbeispiel ebenfalls dem Ausgangsanschluss 20 entstammen kann.

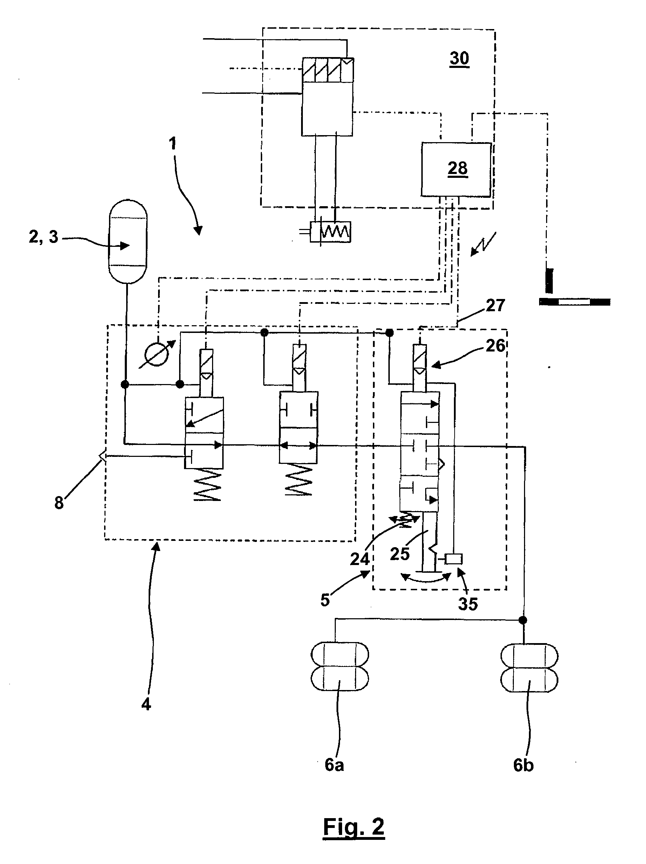

Für das modifizierte Ausführungsbeispiel gemäß **Fig. 2** ist der Aktuator 36 für die Ansteuerung der Rast- oder Verriegelungseinrichtung 35 entfallen. Hier erfolgt die Ansteuerung der Rast- oder Verriegelungseinrichtung 35 durch den Aktuator 26, der in diesem Fall multifunktional ausgebildet ist, da dieser einerseits genutzt wird, um mit elektrischer Bestromung durch das Steuersignal 27 die Hebe-Senk-Ventileinheit 5 aus der Sperrstellung in die Durchlassstellung zu überführen, und andererseits die Rast- oder Verriegelungseinrichtung 35 aktiviert bzw. deaktiviert. (Hierbei können die Betätigungsfunktionen durch den Aktuator 26 für die Umschaltung der Hebe-Senk-Ventileinheit 5 und der Rasteinrichtung 35 pneumatisch unterschiedlich dimensioniert werden, beispielsweise mit unterschiedlichen Drosseln oder Volumina der Steuerräume, so dass mit einem nur kurzen Steuerimpuls die Rasteinrichtung 35 gelöst wird, aber die während dieser kurzen Druckfreigabe entstehende pneumatische Kraft, die die Hebe-Senk-Ventileinheit 5 in Richtung der zu verlassenden Durchlassstellung beaufschlagt, kleiner ist als die Kraft der Totmann-Feder 24, die somit eine Rückstellung bewirken kann.

Für die in Fig. 1 und 2 dargestellten Ausführungsbeispiele kann die Verbindung zu den Luftfederbälgen 6a, 6b auf zwei unterschiedliche Weisen, also redundant, abgesperrt werden, indem
a) die Hebe-Senk-Ventileinheit 5 in die Sperrstellung für aktivierte Niveauregelung bzw. Stellung Stopp für die manuelle Betätigung überführt wird oder
b) bei Hebe-Senk-Ventileinheit 5 in der Durchlassstellung das 2/2-Wegeventil 11 der Niveauregelventileinheit 4 in seine Sperrstellung gesteuert wird.

Diese redundante Ausgestaltung ist bspw. von Vorteil, wenn die Niveauregelventileinheit 4 in einigen Fahrzeugen ohne nachgeschaltete Hebe-Senk-Ventileinheit 5 verwendet wird, womit dann die Sperrfunktion durch das 2/2-Wegeventil 11 erfüllt werden kann, während in anderen Fahrzeugen mit Hebe-Senk-Ventileinheit 5 die Sperrfunktion von der Hebe-Senk-Ventileinheit 5 erfüllt werden kann. Baugleiche Niveauregelventileinheiten 5 sind dann ohne Modifikationen für die genannten Fahrzeuge einsetzbar, womit die Bauteilvielfalt reduziert ist.

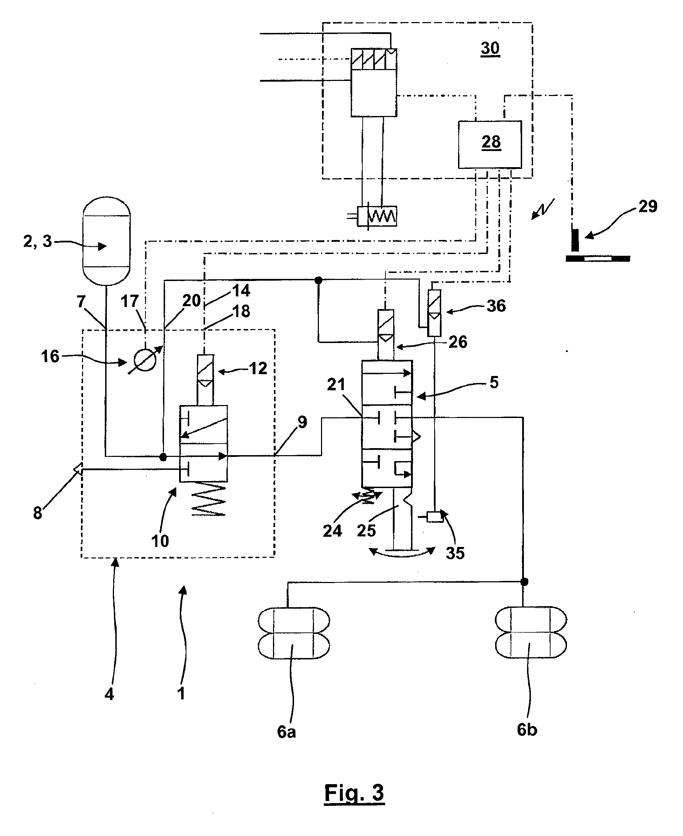

Für das in **Fig. 3** dargestellte Ausführungsbeispiel ist das Sperrventil 11 entfallen, sodass ausschließlich über die Ansteuerung der Hebe-Senk-Ventileinheit 5 über den Aktuator 26 die Luftfederbälge 6a, 6b zum Konstanthalten des Niveaus während aktivierter Niveauregelung abgesperrt werden. In diesem Fall verfügt die Niveauregelventileinheit 4 ausschließlich über das 3/2-Wegeventil 10, sodass (ohne die erfindungsgemäße Zusatzfunktion der Hebe-Senk-Ventileinheit 5) die Niveauregelventileinheit 4 lediglich eine Belüftung und eine Entlüftung ermöglichen würde, nicht aber ein Konstanthalten des Niveaus. Durch den Entfall des Sperrventils 11 kann die Niveauregelventileinheit 4 vereinfacht ausgebildet werden und der Steuerungsaufwand kann unter Umständen verringert sein. Hervorzuheben ist, dass die Hebe-Senk-Ventileinheit 5 bei identischer Ausgestaltung sowohl mit einer Niveauregelventileinheit 4 gemäß Fig. 1 als auch mit einer Niveauregelventileinheit 4 gemäß Fig. 3 eingesetzt werden kann, wobei lediglich die Steuerung durch die Steuereinheit 28 anzupassen ist.

Es versteht sich, dass die Niveauregelventileinheit 4 gemäß Fig. 3 auch, abweichend zu Fig. 3, mit einer Hebe-Senk-Ventileinheit 5 mit Ansteuerung einer Rast- oder Verriegelungseinrichtung 35 durch den Aktuator 26 (vgl. Fig. 2) kombiniert werden kann.

Möglich ist, dass über eine einzige Rast- oder Verriegelungseinrichtung 35 eine Verriegelung in mehreren Schaltstellungen der Hebe-Senk-Ventileinheit 5, insbesondere in der Stellung Heben und/oder Senken erfolgt. Hierfür können aber auch mehrer Rast- und Verriegelungseinrichtungen 35 Einsatz finden, welche jeweils über mindestens einen separaten, von der Steuereinheit 28 angesteuerten Aktuator oder gemeinsam über einen Aktuator 26 angesteuert werden können.

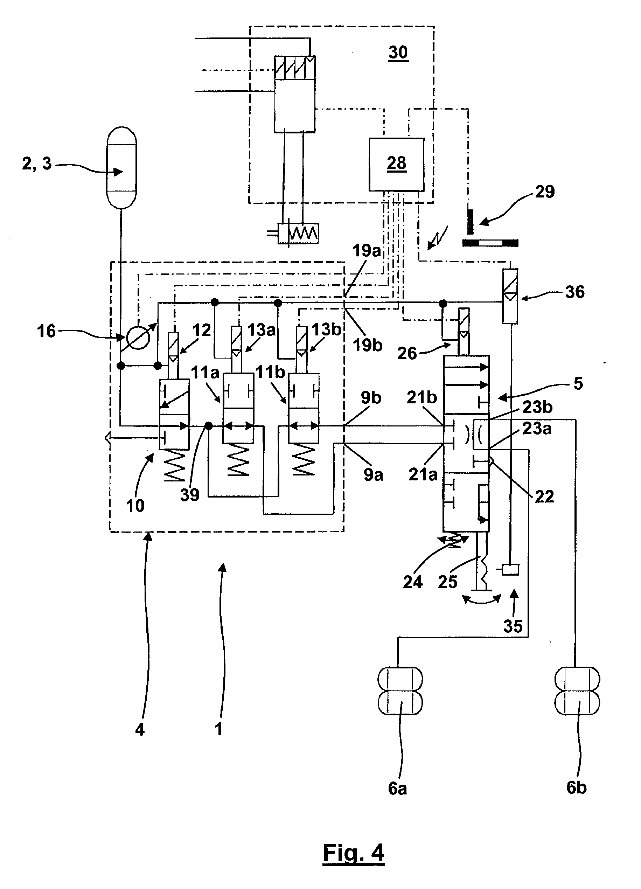

Bei dem in **Fig. 4** dargestellten Ausführungsbeispiel handelt es sich um eine zweikreisige Luftfederungsanlage 1, bei welcher Luftfederbälge 6a einem ersten Kreis, beispielsweise einer rechten Fahrzeugseite, und Luftfederbälge 6b einem zweiten Kreis, insbesondere einer linken Fahrzeugseite, zugeordnet sind. Zur Gewährleistung der Zweikreisigkeit besitzt die Niveauregelventileinheit 4 zwei Ausgangsanschlüsse 9a, 9b. Die Ausgangsanschlüsse 9a, 9b sind jeweils über ein 2/2-Wegeventil 11 a, 11 b und eine Verzweigung 39 mit dem 3/2-Wegeventil 10 verbunden. Befindet sich das 3/2-Wegeventil 10 in seiner Belüftungsstellung (oder Entlüftungsstellung), kann durch selektive Bestromung der Anschlüsse 19a, 19b selektiv ein Ausgangsanschluss 9a, 9b belüftet (bzw. entlüftet) werden. Soll hingegen ein Ausgangsanschluss 9a belüftet werden und ein Ausgangsanschluss 9b entlüftet werden, muss zunächst das 3/2-Wegeventil 10 in seine Belüftungsstellung überführt werden, während das 2/2-Wegeventil 11a in seiner Durchlassstellung ist und das 2/2-Wegeventil 11 b in seiner Sperrstellung ist. Anschließend wird das 3/2-Wegeventil 10 in seine Entlüftungsstellung gebracht, während das 2/2-Wegeventil 11a in seine Sperrstellung überführt wird und das 2/2-Wegeventil 11 b in seine Durchlassstellung überführt wird. Selbstverständlich ist auch eine umgekehrte Reihenfolge möglicht.

Für die zweikreisige Ausbildung der Luftfederungsanlage 1 ist das Hebe-Senk-Ventil als 5/3-Wegeventil ausgebildet mit Eingangsanschlüssen 21 a, 21 b, Ausgangsanschlüssen 23a, 23b sowie einem Entlüftungsanschluss 22. In der in Fig. 4 wirksamen Schaltstellung, also der Stellung Stopp für manuelle Betätigung bzw. die Sperrstellung für die aktivierte Niveauregelung während des Fahrbetriebs, sind die Eingangsanschlüsse 21 b, 21 a abgesperrt, während über eine integrierte Drossel der Hebe-Senk-Ventileinheit 5 die Ausgangsanschlüsse 23a, 23b kurzgeschlossen sind, sodass über diese Drossel die Luftfederbälge 6a, 6b der beiden Kreise miteinander gekoppelt sind.

In der unteren Schaltstellung, also der manuell herbeigeführten Schaltstellung Heben bzw. in der für die aktivierte elektronische Niveauregelung herbeigeführten Durchlassstellung der Hebe-Senk-Ventileinheit 5, verbindet die Hebe-Senk-Ventileinheit 5 den Eingangsanschluss 21 a mit dem Ausgangsanschluss 23a sowie den Eingangsanschluss 21 b mit dem Ausgangsanschluss 23b, sodass für manuelle Betätigung ein Heben des Niveaus beider Kreise erfolgt und für die elektrische Niveauregelung selektiv je nach Stellung der Ventile 10, 11a, 11 b ein Heben oder Senken zumindest eines Kreises erfolgen kann. Weiterhin kann zumindest manuell eine obere Schaltstellung herbeigeführt werden, welche eine Stellung Senken ist. In dieser Schaltstellung werden die Ausgangsanschlüsse 23a, 23b mit dem Entlüftungsanschluss 22 verbunden, womit eine gleichzeitige Entlüftung der Luftfederbälge 6a, 6b beider Kreise erfolgt. Auch hier kann für die elektronische Niveauregelung durch den Aktuator 26 die Hebe-Senk-Ventileinheit 5 in die Durchlassstellung überführt werden. Mittels desselben Aktuators 26, oder wie in Fig. 4 dargestellt, über einen zusätzlichen, von der Steuereinheit 28 angesteuerten Aktuator 36, kann eine pneumatische Ansteuerung einer Rast- oder Verriegelungseinrichtung 35 erfolgen, welche hier die Stellung Heben und Senken bzw. die Durchlassstellung rastieren kann, in dem diese mit zwei Rastnuten des Betätigungsorgans 25 zusammenwirkt.

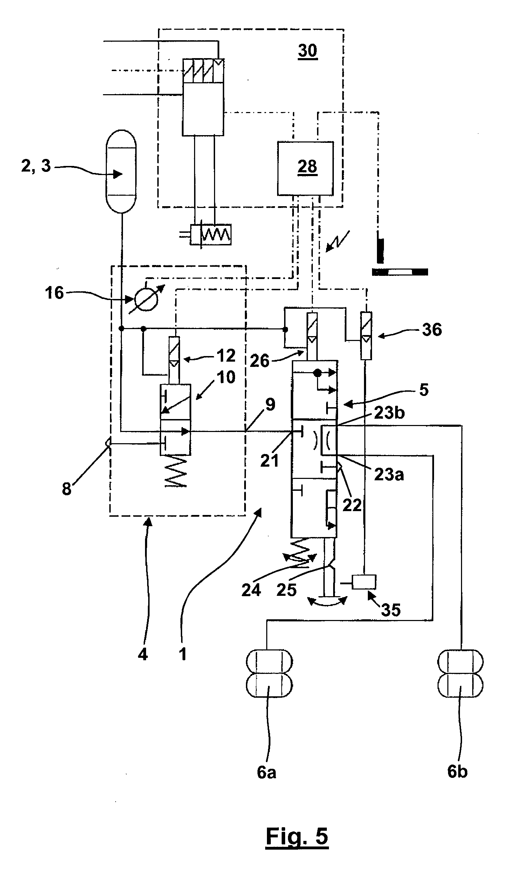

**Fig. 5** zeigt eine abgewandelte Ausführungsform einer zweikreisigen Luftfederungsanlage 1, bei welcher die 2/2-Wegeventile 11 a, 11 b entfallen sind, sodass die Niveauregelventileinheit 4 identisch zu der Niveauregelventileinheit 4 gemäß Fig. 3 ausgebildet ist. Für dieses Ausführungsbeispiel ist die Hebe-Senk-Ventileinheit 5 als 4/3-Wegeventil ausgebildet mit einem Eingangsanschluss 21, zwei Ausgangsanschlüssen 23a, 23b und einem Entlüftungsanschluss 22. In der in Fig. 5 wirksamen mittigen Schaltstellung verbindet die Hebe-Senk-Ventileinheit 5 mit einer integrierten Drossel die Luftfederbälge 6a, 6b der beiden Kreise. In der unteren Schaltstellung (Heben für manuelle Betätigung und Durchlassstellung für elektrische Niveauregelung) ist in der Hebe-Senk-Ventileinheit 5 der Eingangsanschluss 21 mit den beiden Ausgangsanschlüssen 23a, 23b verbunden, während in der oberen Schaltstellung (manuelle Betätigung: Senken) die beiden Ausgangsanschlüsse 23a, 23b mit dem Entlüftungsanschluss 22 verbunden sind. Für das Ausführungsbeispiel gemäß Fig. 5 ist eine gemeinsame Belüftung oder Entlüftung je nach Stellung der Niveauregelventileinheit 4 in der Durchlassstellung der Hebe-Senk-Ventileinheit 5 bei aktivierter Niveauregelung im Fahrbetrieb möglich, während auch ein Absperren für ein Konstanthalten des Niveaus bei aktivierter Niveauregelung möglich ist, indem die Hebe-Senk-Ventileinheit 5 in ihre Sperrstellung überführbar ist.

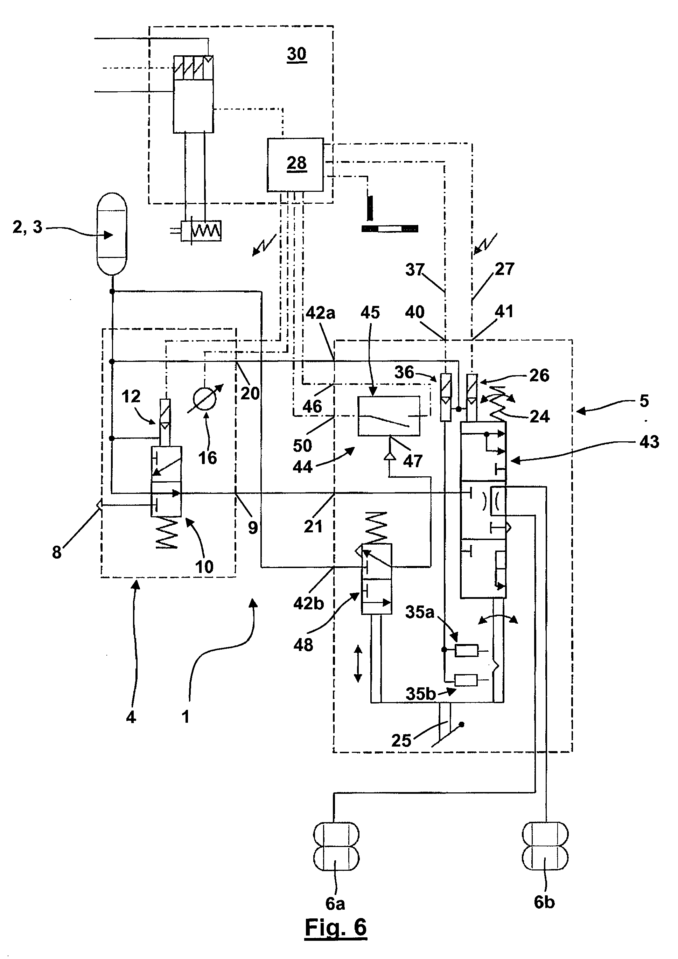

Bei der Ausführungsform der Luftfederungsanlage 1 gemäß **Fig. 6** kommt eine Niveauregelventileinheit 4 entsprechend Fig. 3 zum Einsatz. Hier besitzt die Hebe-Senk-Ventileinheit 5 allerdings neben Anschlüssen 40, 41 für die Steuersignale 27, 37 für die Aktuatoren 26, 36 und dem Eingangsanschluss 21, der mit dem Ausgangsanschluss 9 der Niveauregelventileinheit 4 verbunden ist, Versorgungsanschlüsse 42a, 42b, die unmittelbar, wie dies für den Versorgungsanschluss 42b dargestellt ist, und/oder mittelbar über einen Ausgangsanschluss 20 der Hebe-Senk-Ventileinheit 5, wie dies für den Versorgungsanschluss 42a dargestellt ist, mit dem Behälter 3 verbunden sind. Die über den Anschluss 42a bereitgestellte Druckluft dient der Versorgung der Aktuatoren 26, 36 mit Druckluft, welche dann auf Grundlage der Steuersignale 27, 37 zu einem Steuerdruck umgewandelt wird, mittels welcher eine Umschaltung der Ventileinheit 43 des Hebe-Senk-Ventils, welche der in Fig. 5 dargestellten und beschriebenen Ventileinheit mit den Anschlüssen 21, 22 und 23a, 23b entspricht, sowie eine Aktivierung und/oder Deaktivierung mindestens einer Rast- oder Verriegelungseinrichtung 35a, 35b erfolgt.

Zusätzlich ist in der Ausführungsform gemäß Fig. 6 in der Hebe-Senk-Ventileinheit 5 ein Sensor 44 eingesetzt, dessen Ausgangssignal über einen Anschluss 50 der Steuereinheit 28 zugeführt wird. Der Sensor 44 erfasst eine über das Betätigungsorgan 25 vorgegebene Schaltstellung der Hebe-Senk-Ventileinheit 5, insbesondere, ob sich dieses in der Stellung Heben, Stopp oder Senken befindet. Alternativ oder zusätzlich kann der Sensor 44 detektieren, ob sich die Hebe-Senk-Ventileinheit 5 für die aktivierte Niveauregelung während des Fahrbetriebs in der Durchlassstellung oder in der Sperrstellung befindet.

Als Sensor 44 kann ein beliebiger Wegsensor für eine Erfassung der Betriebsstellung des Betätigungsorgans 25 Einsatz finden. Gemäß dem in Fig. 6 dargestellten Ausführungsbeispiel ist der Sensor 44 mit einem Druckschalter 45 gebildet, der elektrisch über einen Anschluss 46 von der Steuereinheit 28 versorgt wird. Der Druckschalter 45 liefert an seinem Anschluss 50 ein elektrisches Ausgangssignal, welches abhängig davon ist, ob an einem pneumatischen Anschluss 47 ein pneumatischer Druck anliegt (oder einen Schwellwert überschreitet) oder nicht. Der pneumatische Anschluss 47 des Druckschalters 45 ist über ein 3/2-Wegeventil 48 mit dem Versorgungsanschluss 42b verbunden. Das 3/2-Wegeventil 48 leitet in der Belüftungsstellung Druckluft von dem Versorgungsanschluss 42b zu dem Anschluss 47 des Druckschalters 45, während dieses in einer Entlüftungsstellung den Anschluss 47 des Druckschalters 45 entlüftet. Die Schaltstellung des 3/2-Wegeventils 48 wird bewegungsgesteuert entsprechend der manuellen Bewegung des Betätigungsorgans 25, sodass sich dieses beispielsweise in seiner Belüftungsstellung befindet, wenn eine Schaltstellung Heben und/oder Senken angewählt ist, während sich dieses für andere angewählte Schaltstellungen in seiner Entlüftungsstellung befindet (oder umgekehrt). Ebenfalls kann eine Umschaltung des 3/2-Wegeventils 48 erfolgen, wenn während einer aktivierten Niveauregelung im Fahrbetrieb eine Umschaltung der Ventileinheit 43 von der Sperrstellung in die Durchlassstellung und umgekehrt erfolgt. Für den Fall, dass die Hebe-Senk-Ventileinheit 5 mit einer für die Veränderung der Schaltstellung verdrehten Schaltwelle ausgebildet ist, kann die Betätigung des 3/2-Wegeventils 48 beispielsweise über Nocken der Schaltwelle erfolgen, die einen entsprechenden Stößel des 3/2-Wegeventils betätigen. In diesem Fall besitzt der Nocken eine Überhöhung für die Erreichung der Schaltstellungen Heben und/oder Senken bzw. der Sperrstellung oder Durchlassstellung. Um lediglich ein Beispiel für eine alternative Ausgestaltung zu nennen, kann über das Betätigungsorgan 25 eine Kurvenscheibe verdreht werden mit einem Einwirken auf Stößel, wie dies beispielhaft in der Druckschrift EP 2 263 893 A1 beschrieben ist. Durch Einsatz des Sensors 44 kann die elektronische Niveauregelung durch die Niveauregelventileinrichtung 4 deaktiviert werden, wenn erkannt wird, dass eine manuelle Betätigung des Betätigungsorgans 25 vorliegt.

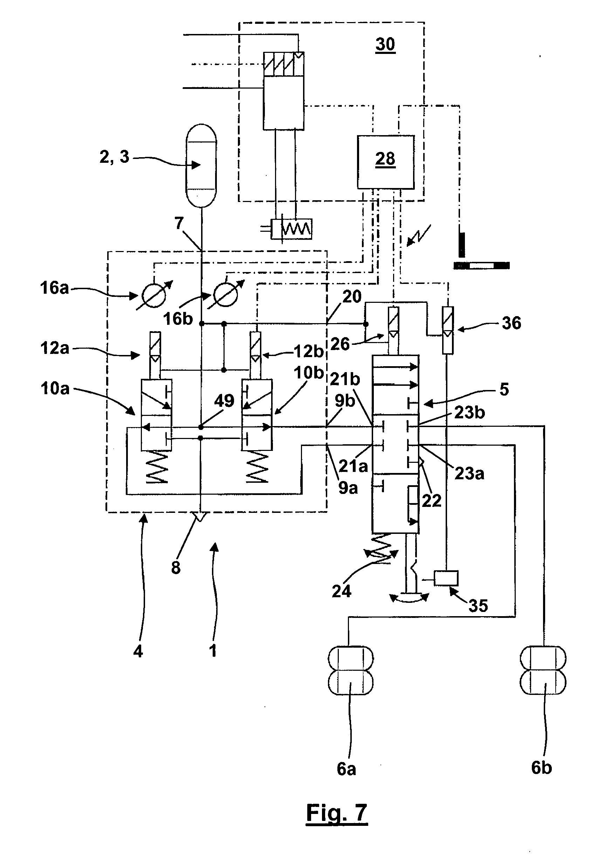

Für das in **Fig. 7** dargestellte Ausführungsbeispiel sind die Luftfederbälge 6a, 6b unterschiedlicher Kreise der Luftfederungsanlage 1 separat angesteuert. Hier finden in der Niveauregelventileinheit 4 zwei 3/2-Wegeventile 10a, 10b Einsatz, welche über eine Verzweigung 49 und den Eingangsanschluss 7 aus dem Behälter 3 mit Druckluft versorgt werden. Ohne das hier Sperrventile 11a, 11b eingesetzt sind, verbinden die 3/2-Wegeventile 10a, 10b in der Belüftungsstellung, die federbeaufschlagt gemäß Fig. 7 eingenommen ist, Ausgangsanschlüsse 9a, 9b mit der Verzweigung, während diese in der bei elektrischer Beaufschlagung der Aktuatoren 12a, 12b eingenommenen Entlüftungsstellung die Ausgangsanschlüsse 9a, 9b entlüften. Die Aktuatoren 12a, 12b können durch die Steuereinheit 28 über zugeordnete elektrische Anschlüsse separat und unabhängig voneinander angesteuert werden, sodass beispielsweise das 3/2-Wegeventil 10a in seine Belüftungsstellung angesteuert werden kann, während das 3/2-Wegeventil 10b in seine Entlüftungsstellung gesteuert wird (Zuführung des Steuersignals zu dem Aktuator 12a in Fig. 7 zur Vereinfachung nicht dargestellt). Die Hebe-Senk-Ventileinheit 5 ist hier als 5/3-Wegeventil ausgebildet mit Eingangsanschlüssen 21a, 21 b, Ausgangsanschlüssen 23a, 23b sowie einem Entlüftungsanschluss 22. In der mittigen, durch die Totmann-Feder 24 automatisch eingenommenen Schaltstellung sind die Eingangs- und Ausgangsanschlüsse 21 a, 21 b, 23a, 23b gesperrt (Stellung Stopp; Sperrstellung für aktivierte Niveauregelung). In der unteren Schaltstellung (Stellung Heben; Durchlassstellung für aktivierte Niveauregelung) ist der Eingangsanschluss 21 b mit dem Ausgangsanschluss 23b und der Eingangsanschluss 21 a mit dem Ausgangsanschluss 23a verbunden. Dies korreliert für manuelle Betätigung mit der Stellung Heben, da ohne Bestromung der Aktuatoren 12a, 12b über die Niveauregelventileinheit 4 die Eingangsanschlüsse 21a, 21b mit dem Behälter 3 verbunden sind. Für die aktivierte Niveauregelung können die Luftfederbälge 6a, 6b je nach Bestromung der Aktuatoren 12a, 12b gemeinsam belüftet oder entlüftet werden oder über ein 3/2-Wegeventil 10a, 10b erfolgt eine Belüftung, während über das andere 3/2-Wegeventil 10a, 10b eine Entlüftung erfolgt. Soll hierbei in einem Kreis der Luftfederungsanlage 1 das Niveau gehalten werden, während in dem anderen Kreis eine Veränderung des Niveaus gewünscht ist, kann das dem Kreis, in welchem das Niveau gehalten werden soll, zugeordnete 3/2-Wegeventil 10a, 10b über die Steuereinheit 28 hin- und hergeschaltet werden. Schließlich sind in der oberen Schaltstellung der Hebe-Senk-Ventileinheit 5 (Stellung Senken) die Luftfederbälge 6a, 6b der beiden Kreise mit dem Entlüftungsanschluss 22 verbunden. Für das in Fig. 7 dargestellte Ausführungsbeispiel finden zwei Sensoren 16a, 16b Einsatz, über welche jeweils ein Niveau in einem Kreis der Luftfederungsanlage 1 erfasst wird. Vorzugsweise sind die Sensoren 16a, 16b in die Niveauregelventileinheit 4 integriert. Das Ausgangssignal dieser Sensoren 16a, 16b wird über geeignete elektrische Anschlüsse der Niveauregelventileinheit 4 der Steuereinheit 28 zugeführt.

Die Betätigung der Hebe-Senk-Ventileinheit 5 kann abweichend zu der genannte Verschwenkung eines Wählhebels beispielsweise auch über eine Betätigung eines Betätigungsorgans 25 in Form einer Wippe erfolgen. Möglich ist, dass die Luftfederungsanlage 1 modular ausgebildet ist. Beispielsweise kann die Luftfederungsanlage 1 gemäß Fig. 1 für ein erstes Fahrzeug eingesetzt werden, während in einem anderen Fahrzeug zwar dieselbe Niveauregelventileinheit 4 Einsatz findet, aber keine Hebe-Senk-Ventileinheit 5 eingesetzt ist.

Wird manuell eine Stellung Heben oder Senken der Hebe-Senk-Ventileinheit 5 vorgegeben, kann das Heben oder Senken durch Einwirken auf mindestens eine Rast- oder Verriegelungseinrichtung 35 und Rückstellung durch die Totmann-Feder 24 automatisch beendet werden, wenn über die Steuereinheit 28 eine automatisierte Rampenanpassung erfolgt. Ebenfalls kann eine Schaltstellung Senken automatisiert verlassen werden, wenn eine weitere Entlüftung der Luftfederbälge 6a, 6b eine unerwünschte vollständige Entleerung der Luftfederbälge zur Folge hätte. Um lediglich ein Beispiel zu nennen, kann über die Ansteuerung der Rast- oder Verriegelungseinrichtung 35 automatisiert ein abgespeichertes Rampenniveau herbeigeführt werden, deren Herbeiführung beispielsweise manuell durch den Fahrer über einen geeigneten Schalter aktiviert wird nach vorheriger Abspeicherung des Rampenniveaus oder automatisiert auf Grundlage eines GPS-Signals aktiviert wird.

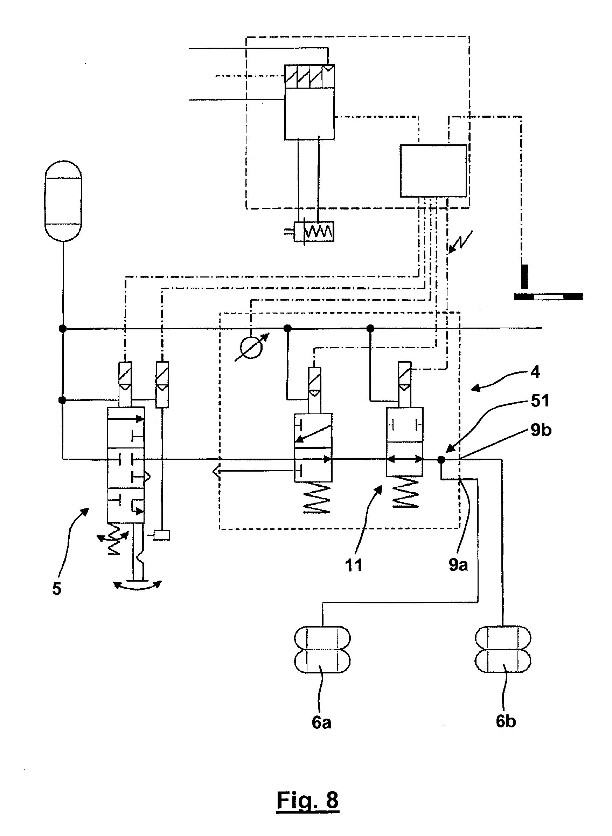

Es versteht sich, dass, wie eingangs erläutert, auch die pneumatische Reihenfolge der Niveauregelventileinheit 4 und der Hebe-Senk-Ventileinheit 5 gegenüber den in den Figuren 1 bis 7 dargestellten Ausführungsformen verändert sein kann, vgl. auch die folgenden Figuren 8 bis 14. In der vorangegangenen Beschreibung wird wiederholt auf die aktivierte Niveauregelung während des Fahrbetriebs hingewiesen. Es versteht sich für den Fachmann, dass eine derartige Niveauregelung auch, ohne manuelle Betätigung des Hebe-Senk-Ventils 5, für temporär oder dauerhaft ruhendes Fahrzeug aktiviert sein kann, beispielsweise während eines Konstanthaltens des Niveaus für ein Beladen des Anhängers, für ein Erkennen eines bevorstehenden Fahrbetriebs mittels eines Sensors, der das Öffnen der Fahrerkabine, eine Sitzbelegung, eine Betätigung der Zündung o. ä. erfasst.

**Fig. 8** zeigt eine im Wesentlichen Fig. 1 entsprechende Ausgestaltung, bei welcher allerdings abweichend zu Fig. 1 die Reihenfolge der Niveauregelventileinheit 4 und der Hebe-Senk-Ventileinheit vertauscht ist. Darüber hinaus ist gemäß Fig. 1 der Ausgangsanschluss 23, hier der Hebe-Senk-Ventileinheit 5, über ein T-Stück oder eine Verzweigung mit den beiden Kreisen der Luftfederbälge 6a, 6b verbunden. Der Bau- und Montageaufwand ist gemäß Fig. 8 verringert, da hier dem Ausgangsanschluss der Niveauregelventileinheit 4 ein in die Niveauregelventileinheit 4 integrierter Verteiler 51 vorgeordnet ist, über welchem der ausgangsseitige Anschluss des 2/2-Wegeventils der Niveauregelventileinheit 4 verzweigt zu Ausgangsanschlüssen 9a, 9b der Niveauregelventileinheit 4, die jeweils mit einem Kreis der Luftfederbälge 6a, 6b pneumatisch verbunden sind.

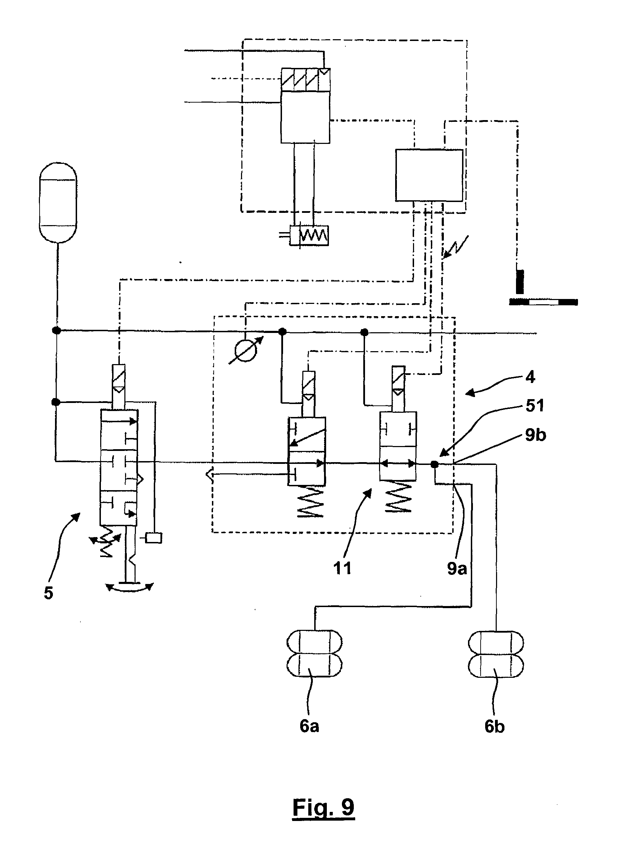

**Fig. 9** zeigt eine grundsätzlich Fig. 2 entsprechend Ausführungsform, bei welcher ebenfalls die Niveauregelventileinheit 4 und die Hebe-Senk-Ventileinheit 5 vertauscht sind. In die Niveauregelventileinheit 4 ist ausgangsseitig des 2/2-Wegeventils 11 ein Verteiler 51 integriert mit einer Verzweigung zu den Ausgangsanschlüssen 9a, 9b.

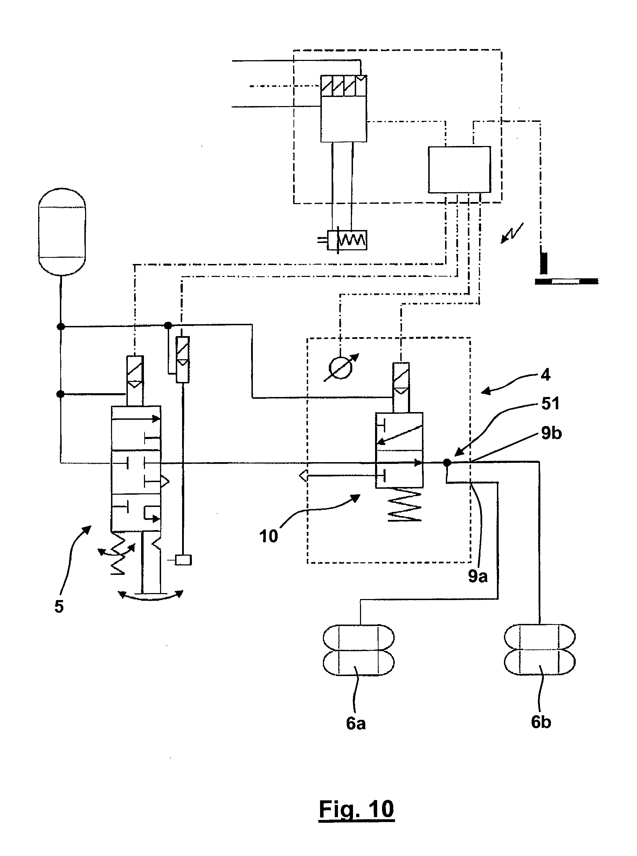

**Fig. 10** zeigt eine Fig. 3 entsprechende Ausgestaltung mit vertauschter Reihenfolge der Niveauregelventileinheit 4 und der Hebe-Senk-Ventileinheit 5, wobei hier der Verteiler 51 ausgangsseitig des 3/2-Wegeventils 10 in die Niveauregelventileinheit 4 integriert ist.

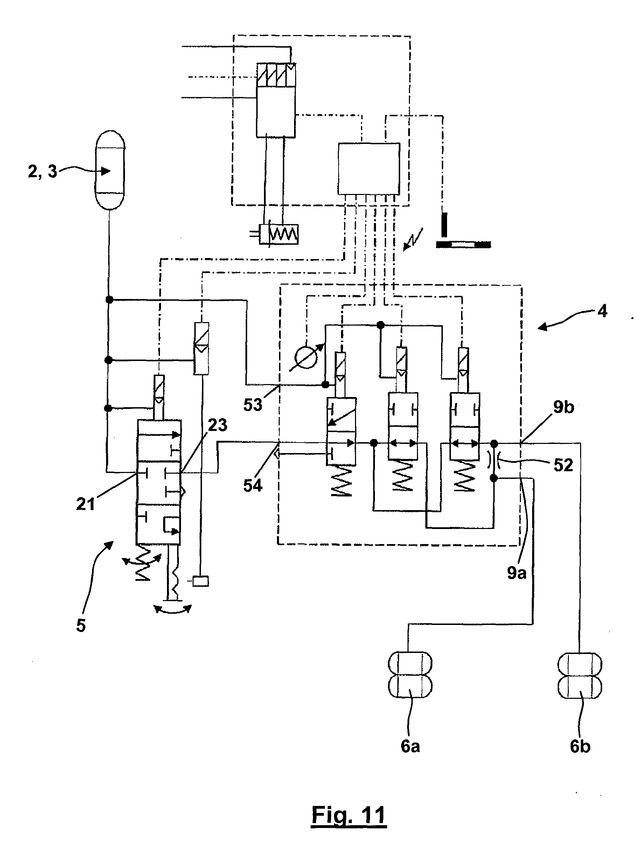

Für das Ausführungsbeispiel gemäß **Fig. 11** ist die Niveauregelventileinheit 4 entsprechend der Niveauregelventileinheit 4 gemäß Fig. 4 ausgebildet. Die beiden Ausgangsanschlüsse 9a, 9b, welche hier unmittelbar mit den Luftfederbälgen 6a, 6b der beiden Kreise pneumatisch verbunden sind, sind in diesem Fall über eine in die Niveauregelventileinheit 4 integrierte Drossel 52 miteinander verbunden. Abweichend zu Fig. 4 verfügt gemäß Fig. 11 die Niveauregelventileinheit 4 über zwei Eingangsanschlüsse 53, 54. Der Eingangsanschluss 53 ist unmittelbar mit der Druckluftquelle 2 bzw. dem Behälter 3 pneumatisch verbunden und dient der Druckluftversorgung der Aktuatoren 12, 13a, 13b. Hingegen ist zwischen den Eingangsanschluss 54 und die Druckluftquelle 2 bzw. den Behälter 3 die Hebe-Senk-Ventileinheit 5 zwischengeordnet, die entsprechend der Ausführungsform der Hebe-Senk-Ventileinheit 5 gemäß Fig. 1 ausgebildet ist. Hierbei ist der Ausgangsanschluss 23 der Hebe-Senk-Ventileinheit 5 mit dem Eingangsanschluss 54 der Niveauregelventileinheit 4 verbunden, während der Eingangsanschluss 21 der Hebe-Senk-Ventileinheit 5 mit dem Behälter 3 verbunden ist.

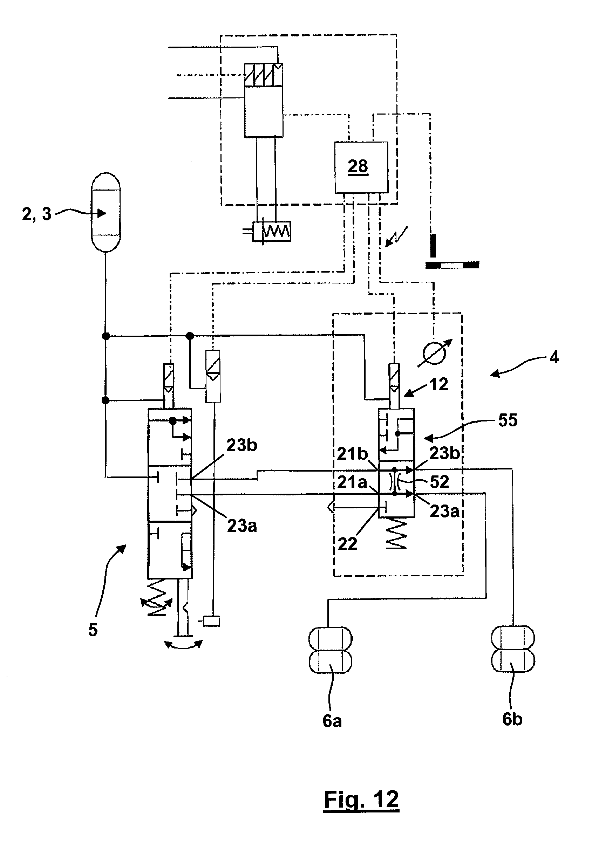

Für das in **Fig. 12** dargestellte Ausführungsbeispiel ist die Hebe-Senk-Ventileinheit 5 entsprechend dem Ausführungsbeispiel gemäß Fig. 5 ausgebildet, wobei allerdings in der mittigen, in Fig. 12 wirksamen Schaltstellung die Ausgangsanschlüsse 23a, 23b nicht wie in Fig. 5 dargestellt über eine Drossel miteinander gekoppelt sind, sondern gegeneinander abgesperrt sind. Der Eingangsanschluss 21 ist in diesem Fall mit dem Behälter 3 verbunden. Für dieses Ausführungsbeispiel ist die Hebe-Senk-Ventileinheit 5 ein 5/2-Wegeventil 55. Dieses besitzt einen Entlüftungsanschluss 22, Ausgangsanschlüsse 23a, 23b, welche jeweils mit Luftfederbälgen 6a, 6b der beiden Kreise verbunden sind, und Eingangsanschlüsse 21 a, 21 b, die mit den Ausgangsanschlüssen 23a, 23b der Hebe-Senk-Ventileinheit 5 verbunden sind. In der in Fig. 12 wirksamen Schaltstellung verbindet das 5/2-Wegeventil 55 jeweils Luftfederbälge 6a, 6b eines Kreises mit einem Ausgangsanschluss 23a, 23b der Hebe-Senk-Ventileinheit 5, wobei über eine in das 5/2-Wegeventil 55 integrierte Drossel 52 eine Kopplung der beiden Kreise erfolgt. Hingegen verbindet das 5/2-Wegeventil in der anderen Schaltstellung die Luftfederbälge 6a, 6b der beiden Kreise mit dem Entlüftungsanschluss 22. Das 5/2-Wegeventil 55 ist über die Steuereinheit 28 elektropneumatisch vorgesteuert ,wozu ein geeigneter Aktuator 12 Einsatz findet, welcher aus dem Behälter 3 mit Druckluft versorgt wird.

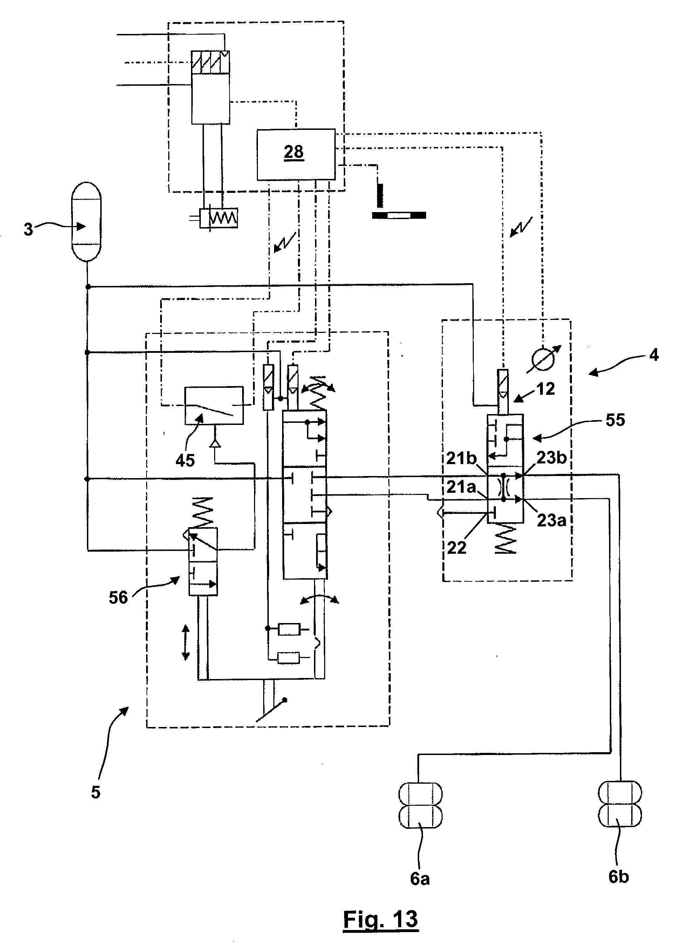

Das Ausführungsbeispiel gemäß **Fig. 13** entspricht im Wesentlichen dem Ausführungsbeispiel gemäß Fig. 12. Allerdings wird hier die Hebe-Senk-Ventileinheit 5 über einen verschwenkten Wählhebel betätigt. Dieser Wählhebel betätigt zusätzlich ein 3/2-Wegeventil 56. Die gleichzeitige Betätigung kann unter Einsatz von Kurvenscheiben mit radial ineinander geschachtelten Betätigungskonturen erfolgen, wie dies beispielsweise in EP 2 263 892 A1 im Detail beschrieben ist. Je nach Stellung des Wählhebels, also auch je nach Stellung des 4/3-Wegeventils zum eigentlichen Heben und Senken des Fahrzeugaufbaus nimmt das 3/2-Wegeventil 56 eine Belüftungsstellung ein, in welcher der Behälter 3 mit einem Druckschalter 45 verbunden ist, oder eine in Fig. 13 wirksame Entlüftungsstellung ein, in welcher der Druckschalter 45 druckentlastet ist. Das Ausgangssignal des Druckschalters 45 wird der Steuereinheit 28 zugeführt, wo damit ein Signal hinsichtlich des Betriebszustands der Hebe-Senk-Ventileinheit 5 vorliegt.

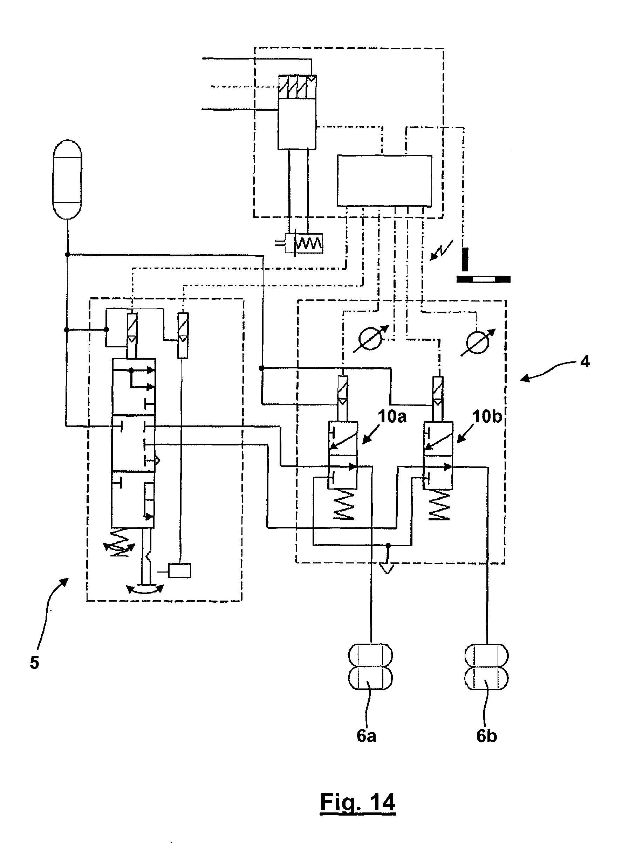

Gemäß **Fig. 14** ist die Hebe-Senk-Ventileinheit 5 im Wesentlichen entsprechend Fig. 12 ausgebildet. Hier besitzt die Niveauregelventileinheit 4 zwei jeweils mit der Hebe-Senk-Ventileinheit 5 eingangsseitig verbundene 3/2-Wegeventile 10a, 10b, die ausgangsseitig jeweils mit Luftfederbälgen 6a, 6b der beiden Kreise verbunden sind. Die 3/2-Wegeventile 10a, 10b besitzen eine Entlüftungsstellung sowie eine in Fig. 14 wirksame Belüftungsstellung, in welcher in der in Fig. 14 wirksamen Schaltstellung der Hebe-Senk-Ventileinheit 5 die Luftfederbälge 6a, 6b abgesperrt sind, während mit über die Steuereinheit 28 angesteuerter veränderter Schaltstellung der Hebe-Senk-Ventileinheit 5 die Luftfederbälge 6a, 6b durch das Zusammenwirken der Hebe-Senk-Ventileinheit 5 und der Niveauregelventileinheit 4 be- und entlüftet werden können.

### BEZUGSZEICHENLISTE

- 1: Luftfederungsanlage
- 2: Druckluftquelle
- 3: Behälter
- 4: Niveauregelventileinheit
- 5: Hebe-Senk-Ventileinheit
- 6: Luftfederbalg
- 7: Eingangsanschluss
- 8: Entlüftung
- 9: Ausgangsanschluss
- 10: 3/2-Wegeventil
- 11: 2/2-Wegeventil
- 12: Aktuator
- 13: Aktuator
- 14: elektr. Steuersignal
- 15: elektr. Steuersignal
- 16: Sensor
- 17: elektr. Anschluss
- 18: elektr. Anschluss
- 19: elektr. Anschluss
- 20: Ausgangsanschluss
- 21: Eingangsanschluss
- 22: Entlüftungsanschluss
- 23: Ausgangsanschluss
- 24: Totmann-Feder
- 25: Betätigungsorgan
- 26: Aktuator
- 27: elektr. Steuersignal
- 28: Steuereinheit
- 29: Radsensor
- 30: EBS
- 31: Steuersignal
- 32: Bremssteuerventil
- 33: Vorratsleitung
- 34: Bremssteuerleitung
- 35: Rasteinrichtung
- 36: Aktuator
- 37: Steuerleitung
- 38: Kombi-Federspeicherbremszylinder
- 39: Verzweigung
- 40: Anschluss
- 41: Anschluss
- 42: Versorgungsanschluss
- 43: Ventileinheit
- 44: Sensor
- 45: Druckschalter
- 46: Anschluss
- 47: Anschluss
- 48: 3/2-Wegeventil
- 49: Verzweigung
- 50: Anschluss
- 51: Verteiler
- 52: Drossel
- 53: Eingangsanschluss
- 54: Eingangsanschluss
- 55: 5/2-Wegeventil
- 56: 3/2-Wegeventil

## Patentansprüche

1. Luftfederungsanlage (1), bei welcher eine ausschließlich über elektrische Steuersignale (14, 15) betätigbare Niveauregelventileinheit (4) sowie eine manuell betätigbare Hebe-Senk-Ventileinheit (5) in pneumatischer Reihenschaltung zwischen eine Druckluftquelle (2) und Luftfederbälge (6) zwischengeschaltet sind, wobei während des Fahrbetriebs und bei aktivierter automatischer Niveauregelung die Hebe-Senk-Ventileinheit (5) über eine elektrische Steuereinheit (28) zwischen einer Durchlassstellung, in der eine Veränderung eines Niveaus der Luftfederbälge (6) erfolgt, und einer Sperrstellung, in der ein Niveau der Luftfederbälge (6) unverändert bleibt, hin- und herschaltbar ist, **dadurch gekennzeichnet, dass** die Steuereinheit mit Steuerlogik ausgestattet ist, welche die Sperrstellung der Hebe-Senk-Ventileinheit (5) ansteuert, wenn das Niveau einem Solliveau entspricht oder nur in einem zulässigen Ausmaß von dem Sollniveau abweicht.

2. Luftfederungsanlage (1) nach Anspruch 1, **dadurch gekennzeichnet, dass**
a) zum Heben des Niveaus während einer automatischen Niveauregelung in der Durchlassstellung der Hebe-Senk-Ventileinheit (5) und in einer Belüftungsstellung der Niveauregelventileinheit (4) die Druckluftquelle (2) über die Niveauregelventileinheit (4) und die Hebe-Senk-Ventileinheit (5) pneumatisch mit den Luftfederbälgen (6) verbunden ist,
b) zum Senken des Niveaus während einer automatischen Niveauregelung in der Durchlassstellung der Hebe-Senk-Ventileinheit (5) und in einer Entlüftungsstellung der Niveauregelventileinheit (4) eine Entlüftung über die Hebe-Senk-Ventileinheit (5) mit den Luftfederbälgen (6) verbunden ist, und
c) zum Konstanthalten des Niveaus während einer aktivierten automatischen Niveauregelung in der Sperrstellung der Hebe-Senk-Ventileinheit (5) die pneumatische Verbindung zwischen den Luftfederbälgen (6) und der Entlüftung und der Druckluftquelle (2) unterbrochen ist.

3. Luftfederungsanlage (1) nach Anspruch 1 oder 2, **dadurch gekennzeichnet, dass** die Hebe-Senk-Ventileinheit (5) zwischen der Niveauregelventileinheit (4) und den Luffederbälgen (6) angeordnet ist.

4. Luftfederungsanlage (1) nach einem der Ansprüche 1 bis 3, **dadurch gekennzeichnet, dass** eine Steuereinheit (28) vorgesehen ist, über welche
a) sowohl eine elektrische Ansteuerung der Niveauregelventileinheit (4) zum Überführen der Niveauregelventileinheit (4) in eine Belüftungsstellung und/oder eine Entlüftungsstellung
b) als auch ein Umschalten der Hebe-Senk-Ventileinheit (5) von der Durchlassstellung in die Sperrstellung und/oder von der Sperrstellung in die Durchlassstellung erfolgt.

5. Luftfederungsanlage (1) nach Anspruch 4, **dadurch gekennzeichnet, dass** der Steuereinheit (28) ein Signal mindestens eines Wegsensors (16) zugeführt wird.

6. Luftfederungsanlage (1) nach einem der vorhergehenden Ansprüche, **dadurch gekennzeichnet, dass** die Niveauregelventileinheit (4) über mindestens ein elektrisch ansteuerbares 2/2-Wegeventil (11) sowie ein elektrisch ansteuerbares 3/2-Wegeventil (10) verfügt.

7. Luftfederungsanlage (1) nach einem der vorhergehenden Ansprüche, **dadurch gekennzeichnet, dass** die Niveauregelventileinheit (4) mindestens ein elektrisch ansteuerbares Ventil (10; 11) in Ausbildung als elektromagnetisch vorgesteuertes Vorsteuerventil besitzt.

8. Luftfederungsanlage (1) nach einem der vorhergehenden Ansprüche, **dadurch gekennzeichnet, dass** die Niveauregelventileinheit (4) lediglich mindestens eine Belüftungsstellung sowie mindestens eine Entlüftungsstellung, aber keine Sperrstellung besitzt.

9. Luftfederungsanlage (1) nach einem der vorhergehenden Ansprüche, **dadurch gekennzeichnet, dass** mindestens ein Federelement (24) vorgesehen ist, über welches eine Rückführung der Hebe-Senk-Ventileinheit (5) von der Durchlassstellung in die Sperrstellung ermöglicht ist.

10. Luftfederungsanlage (1) nach einem der vorhergehenden Ansprüche, **dadurch gekennzeichnet, dass** mindestens eine Rast- oder Verriegelungseinheit (35) vorgesehen ist, über die mindestens eine Stellung der Hebe-Senk-Ventileinheit (5) verrastbar oder verriegelbar ist und welche über ein elektrisches Steuersignal (37) aktivierbar und/oder deaktivierbar ist.

11. Luftfederungsanlage (1) nach einem der vorhergehenden Ansprüche, **dadurch gekennzeichnet, dass** ein Sensor (Wegsensor 44, Druckschalter 45) vorhanden ist, welcher eine Betriebsstellung des Betätigungsorgans (25) der Hebe-Senk-Ventileinheit (5) erfasst.

## Claims

1. Air suspension system (1), wherein a level control valve unit (4) solely actuated by electrical control signals (14, 15) and a manually actuated valve unit (5) for lifting and lowering are interposed in pneumatical series connection between a source (2) of pressurized air and air suspension bellows (6) wherein during drive and for activated automatical level control the valve unit (5) for lifting and lowering is switchable by an electrical control unit (28) between a passing state wherein a level of the air suspension bellows (6) is changed and a blocking state wherein a level of the air suspension bellows (6) remains unchanged, **characterised by** the control unit comprising control logic for controlling the valve unit (5) for lifting and lowering into the blocking state if the level corresponds to a set level or deviates from the set level in an admissible range.

2. Air suspension system (1) of claim 1, wherein
a) for lifting the level during an automatical level control in the passing state of the valve unit (5) for lifting and lowering and in an aerating state of the level control valve unit (4) the source (2) of pressurized air is pneumatically connected with the air suspension bellows (6) via the level control valve unit (4) and the valve unit (5) for lifting and lowering,
b) for lowering the level during an automatical level control in the passing state of the valve unit (5) for lifting and lowering and in the deaerating state of the level control valve unit (4) a vent is connected via the valve unit (5) for lifting and lowering with the air suspension bellows (6), and
c) for holding the level constant during an activated automatical level control in the blocking state of the valve unit (5) for lifting and lowering the pneumatical connection between the air suspension bellows (6) and the vent and the source (2) of pressurized air is interrupted.

3. Air suspension system (1) of claim 1 or 2, wherein the valve unit (5) for lifting and lowering is located between the level control valve unit (4) and the air suspension bellows (6).

4. Air suspension system (1) of one of claims 1 to 3, wherein a control unit (28) is provided by which
a) an electrical control of the level control valve unit (4) for transferring the level control valve unit (4) into an aerating state and/or a deaerating state
b) as well as a transfer of the valve unit (5) for lifting and lowering from the passing state into the blocking state and/or from the blocking state into the passing state is provided.

5. Air suspension system (1) of claim 4, wherein a signal from at least one displacement sensor (16) is transferred to the control unit (28).

6. Air suspension system (1) of one of claims 1 to 5, wherein the level control valve unit (4) comprises at least one electrically controllable 2/2-valves (11) as well as an electrically controllable 3/2-valve (10).

7. Air suspension system (1) of one of claims 1 to 6, wherein the level control valve unit (4) comprises at least one electrically controllable valve (10; 11) formed by an electromagnetically or solenoid pilot-controlled pilot valve.

8. Air suspension system (1) of one of claims 1 to 7, wherein the level control valve unit (4) only comprises at least on aerating state and at least one deaerating state, but no blocking state.

9. Air suspension system (1) of one of claims 1 to 8, wherein at least one spring element (24) is provided by which a return of the valve unit (5) for lifting and lowering from the passing state into the blocking state is provided.

10. Air suspension system (1) of one of claims 1 to 9, wherein at least one latching or locking unit (34) is provided by which at least one state of the valve unit (5) for lifting and lowering is latchable or lockable and which is activatable and/or deactivatable by an electrical control signal (37).

11. Air suspension system (1) of one of claims 1 to 10, wherein a sensor (displacement sensor 44, pressure switch 45) is provided which senses an operating state of the actuation means (25) of the valve unit (5) for lifting and lowering.

## Revendications

1. Système de suspension pneumatique (1), dans lequel une unité de valve de nivellement (4) actionnable exclusivement par l'intermédiaire de signaux de commande (14, 15) électriques, ainsi qu'une unité de valve de montée et descente (5), actionnable manuellement, sont montées entre une source d'air comprimé (2) et des soufflets pneumatiques (6), pendant le déplacement du véhicule et lorsque le réglage automatique est activé, l'unité de valve de montée et descente (5) étant commutée, par une unité de commande (28) électrique, en va-et-vient entre une position de passage, dans laquelle se produit une variation du niveau des soufflets pneumatiques (6), et une position de blocage, dans laquelle un niveau des soufflets pneumatiques (6) reste inchangé, **caractérisé en ce que** l'unité de commande est équipée d'une logique de commande, qui active la position de blocage de l'unité de valve de montée et descente (5) lorsque le niveau correspond à un niveau de consigne ou s'écarte du niveau de consigne seulement selon une valeur admissible.

2. Système de suspension pneumatique (1) selon la revendication 1, **caractérisé en ce que**
a) pour relever le niveau pendant un réglage automatique du niveau dans la position de passage de l'unité de valve de montée et descente (5) et dans une position de ventilation de l'unité de valve de nivellement (4), la source d'air comprimé (2) est reliée pneumatiquement aux soufflets pneumatiques (6) par l'intermédiaire de l'unité de valve de nivellement (4) et de l'unité de valve de montée et descente (5),
b) pour abaisser le niveau pendant un réglage automatique du niveau dans la position de passage de l'unité de valve de montée et descente (5) et dans une position de purge de l'unité de valve de nivellement (4), une purge est reliée aux soufflets pneumatiques (6) par l'intermédiaire de l'unité de valve de montée et descente (5), et
c) pour maintenir constant le niveau pendant qu'un réglage automatique du niveau est activé dans la position de blocage de l'unité de valve de montée et descente (5), la liaison pneumatique entre les soufflets pneumatiques (6) et la purge et la source d'air comprimé (2) est interrompue.

3. Système de suspension pneumatique (1) selon la revendication 1 ou 2, **caractérisé en ce que** l'unité de valve de montée et descente (5) est disposée entre l'unité de valve de nivellement (4) et les soufflets pneumatiques (6).

4. Système de suspension pneumatique (1) selon l'une quelconque des revendications 1 à 3, **caractérisé en ce qu'**il est prévu une unité de commande (28), par laquelle s'effectue
a) une activation électrique de l'unité de valve de nivellement (4) pour amener l'unité de valve de nivellement (4) dans une position de ventilation et/ou une position de purge,
b) de même qu'une commutation de l'unité de valve de montée et descente (5) à partir de la position de passage vers la position de blocage et/ou à partir de la position de blocage vers la position de passage.

5. Système de suspension pneumatique (1) selon la revendication 4, **caractérisé en ce qu'**un signal d'au moins un capteur de déplacement (16) est acheminé vers l'unité de commande (28).

6. Système de suspension pneumatique (1) selon l'une quelconque des revendications précédentes, **caractérisé en ce que** l'unité de valve de nivellement (4) dispose d'au moins une vanne à 2/2 voies (11) activable électriquement, ainsi que d'une vanne 3/2 voies (10) activable électriquement.

7. Système de suspension pneumatique (1) selon l'une quelconque des revendications précédentes, **caractérisé en ce que** l'unité de valve de nivellement (4) possède au moins une vanne (10 ; 11) activable électriquement, laquelle forme une vanne pilote pré-commandée par voie électromagnétique.

8. Système de suspension pneumatique (1) selon l'une quelconque des revendications précédentes, **caractérisé en ce que** l'unité de valve de nivellement (4) possède seulement au moins une position de ventilation, ainsi qu'au moins une position de purge, mais pas de position de blocage.

9. Système de suspension pneumatique (1) selon l'une quelconque des revendications précédentes, **caractérisé en ce qu'**il est prévu au moins un élément à ressort (24), qui permet de rappeler l'unité de valve de montée et descente (5) depuis la position de passage dans la position de blocage.

10. Système de suspension pneumatique (1) selon l'une quelconque des revendications précédentes, **caractérisé en ce qu'**il est prévu au moins une unité de blocage ou verrouillage (35), par laquelle l'unité de valve de montée et descente (5) peut être bloquée ou verrouillée dans au moins une position et laquelle est activable ou désactivable par l'intermédiaire d'un signal de commande (37) électrique.

11. Système de suspension pneumatique (1) selon l'une quelconque des revendications précédentes, **caractérisé en ce qu'**un capteur (capteur de déplacement 44, interrupteur à pression 45) est disponible, lequel détecte une position de service de l'organe d'actionnement (25) de l'unité de valve de montée et descente (5).
